# EUROPEAN PATENT SPECIFICATION

(11) **EP 4 404 477 B1**
(45) Date of publication and mention of the grant of the patent: **25.11.2026**
(21) Application number: 22891823.1
(22) Date of filing: 29.10.2022
(51) Int. Cl.: H04B 7/185, H04B 10/118, H04W 24/02

(54) **PARAMETER UPDATING METHOD AND SYSTEM IN SHORT PACKET COMMUNICATION SYSTEM, AND RELATED APPARATUS**
VERFAHREN UND SYSTEM ZUR PARAMETERAKTUALISIERUNG IN EINEM KURZPAKET-KOMMUNIKATIONSSYSTEM SOWIE ZUGEHÖRIGE VORRICHTUNG
PROCÉDÉ ET SYSTÈME DE MISE À JOUR DE PARAMÈTRES DANS UN SYSTÈME DE COMMUNICATION PAR PAQUETS COURTS, ET APPAREIL ASSOCIÉ

(30) Priority: 11.11.2021 CN 202111332732
(43) Date of publication of application: 24.07.2024
(73) Proprietor: Huawei Technologies Co., Ltd., Shenzhen, Guangdong 518129 (CN)
(72) Inventor: SONG, Dake, Shenzhen, Guangdong 518129 (CN); QIAN, Feng, Shenzhen, Guangdong 518129 (CN); LIN, Lixin, Shenzhen, Guangdong 518129 (CN); WANG, Bao, Shenzhen, Guangdong 518129 (CN); ZHONG, Jilei, Shenzhen, Guangdong 518129 (CN); XU, Haibo, Shenzhen, Guangdong 518129 (CN)
(74) Representative: Gill Jennings & Every LLP
(86) International application number: PCT/CN2022/128454
(87) International publication number: WO 2023/083027

(56) References cited:
- WO-A2-2008/053308
- CN-A- 107 036 606
- CN-A- 109 962 794
- CN-A- 110 730 429
- CN-A- 112 955 866
- CN-A- 113 376 667
- CN-A- 113 376 667
- US-A1- 2017 248 428

## Description

### TECHNICAL FIELD

This application relates to the field of BeiDou communication technologies and the field of compression technologies, and in particular, to a parameter update method in a BeiDou communication system, a system, and a related apparatus.

### BACKGROUND

A BeiDou navigation satellite system is a major infrastructure that is independently developed by China and that integrates positioning, timing, and communication. A BeiDou short packet system sends short packet information through a BeiDou satellite system. The BeiDou short packet system is especially suitable for communication in areas that are not covered by mobile communication, or that cannot be covered by mobile communication, or in which communication systems are damaged, such as oceans, deserts, grasslands, or no-man's land.

Because a BeiDou short packet satellite moves in real time, satellite channel information and satellite beam information change constantly. Therefore, a related parameter in a BeiDou network device also needs to be correspondingly adapted with a change of the satellite channel information and the beam information. In addition, a communication protocol stack parameter in a BeiDou communication system also needs to evolve based on a protocol version. In addition, authentication information (for example, an authentication server domain name address) and an operator's public land mobile network (public land mobile network, PLMN) may also change. Therefore, a terminal also needs to update a related parameter in time, so that performance of communication between the terminal and the BeiDou network device is not affected.

CN 113 376 667 A discusses a Beidou monitoring terminal and a monitoring method; the terminal comprising an integrated antenna, an LORA external antenna, a 4G network module, a WIFI module, an LORA module, a GNSS module, an MEMS sensor and a processor. WO 2008/053308 A2 discloses a module for use in a serving mobile Location Centre or a mobile station having a GPS receiver for determining an ITOW for a CNAV-1 signal.

Therefore, after the related parameter in the BeiDou network device is updated, how to enable the terminal 100 to update the related parameter in time is an urgent problem to be resolved.

### SUMMARY

The invention is defined by the appended claims. This application provides a parameter update method in a BeiDou communication system, a system, and a related apparatus. According to the method provided in embodiments of this application, before communicating with a BeiDou network device, a terminal can update, in time, a related parameter that enables the terminal to normally communicate with the BeiDou network device. The invention is defined in the appended claim set.

According to a first aspect, a parameter update method in a BeiDou communication system is provided. The method may include: A first terminal obtains first version information of a locally configured first BeiDou communication parameter when the first terminal meets a first condition, where the first condition includes that the first terminal leaves a resident location within preset duration; the first terminal obtains, from a server, second version information of a second BeiDou communication parameter in the server; when a version indicated in the second version information is later than a version indicated in the first version information, the first terminal obtains the second BeiDou communication parameter in the server; and the first terminal updates the locally configured first BeiDou communication parameter to the second BeiDou communication parameter.

In this way, before communicating with a BeiDou network device, the first terminal can update, in time, a related parameter that enables the terminal to normally communicate with the BeiDou network device. In addition, the first terminal first compares version information, and the terminal obtains a BeiDou communication parameter in the server only when a version of the BeiDou communication parameter in the server is later than a version of a BeiDou communication parameter in the terminal. In this way, it can be avoided that the first terminal still updates the parameter when versions of the first BeiDou communication parameter and the second BeiDou communication parameter are the same. In this way, power consumption of the first terminal can be reduced.

With reference to the first aspect, in a possible implementation, the first BeiDou communication parameter and the second BeiDou communication parameter indicate a data transmission format and a data transmission rate used when the first terminal communicates with the BeiDou network device.

With reference to the first aspect, in a possible implementation, the first BeiDou communication parameter and the second BeiDou communication parameter include a key parameter and a non-key parameter, and the key parameter carries a first identifier; the key parameter is sent by the server to the terminal at a first moment, and the non-key parameter is sent by the server to the terminal at a second moment; and the second moment is later than the first moment. Because the non-key parameter does not affect performance of communication between the first terminal and the BeiDou network device, the non-key parameter may be updated later, and does not need to be updated in real time. In this way, power consumption of the first terminal can be reduced.

With reference to the first aspect, in a possible implementation, the first BeiDou communication parameter includes one or more of a satellite ephemeris orbit parameter, a protocol stack parameter, a satellite channel parameter, a satellite beam information parameter, a BeiDou network device information parameter, a terminal capability information parameter, a compression information parameter, and an application information parameter; and the second BeiDou communication parameter includes one or more of a satellite ephemeris orbit parameter, a protocol stack parameter, a satellite channel parameter, a satellite beam information parameter, a BeiDou network device information parameter, a terminal capability information parameter, a compression information parameter, and an application information parameter.

With reference to the first aspect, in a possible implementation, the first version information includes update time of the first BeiDou communication parameter and/or a version number of the first BeiDou communication parameter; and the second version information includes update time of the second BeiDou communication parameter and/or a version number of the second BeiDou communication parameter.

With reference to the first aspect, in a possible implementation, that the version indicated in the second version information is later than the version indicated in the first version information includes: The update time of the second BeiDou communication parameter is later than the update time of the first BeiDou communication parameter, or the version number of the second BeiDou communication parameter is later than the version number of the first BeiDou communication parameter.

With reference to the first aspect, in a possible implementation, after the first terminal updates the locally configured first BeiDou communication parameter to the second BeiDou communication parameter, the method may further include: The first terminal communicates with the BeiDou network device based on the second BeiDou communication parameter.

With reference to the first aspect, in a possible implementation, before the first terminal obtains the first version information of the locally configured first BeiDou communication parameter when the first terminal meets the first condition, the method further includes: The first terminal determines, based on one or more of location information of the first terminal, a network connected to the first terminal, and travel information of the first terminal, that the first terminal meets the first condition.

According to an exampleaspect, a parameter update method in a BeiDou communication system is provided. The method may include: A server sends a second BeiDou communication parameter to a first terminal based on a first request sent by the first terminal, where a first BeiDou communication parameter is locally configured on the first terminal, a version of the second BeiDou communication parameter is later than a version of the first BeiDou communication parameter, and the server is configured to store a BeiDou communication parameter and version information of the BeiDou communication parameter.

In this way, before communicating with a BeiDou network device, the first terminal can update, in time, a related parameter that enables the terminal to normally communicate with the BeiDou network device.

With reference to the example, in a possible implementation, before the server sends the second BeiDou communication parameter to the first terminal based on the first request sent by the first terminal, the method may further include: The server sends second version information of the second BeiDou communication parameter to the first terminal based on a second request of the first terminal, where a version indicated in the second version information is later than a version indicated in first version information of the first BeiDou communication parameter.

With reference to the example, in a possible implementation, the first BeiDou communication parameter and the second BeiDou communication parameter indicate a data transmission format and a data transmission rate used when the first terminal communicates with the BeiDou network device.

With reference to the example, in a possible implementation, the first BeiDou communication parameter and the second BeiDou communication parameter include a key parameter and a non-key parameter, and the key parameter carries a first identifier; the key parameter is sent by the server to the terminal at a first moment, and the non-key parameter is sent by the server to the terminal at a second moment; and the second moment is later than the first moment. Because the non-key parameter does not affect performance of communication between the first terminal and the BeiDou network device, the non-key parameter may be updated later, and does not need to be updated in real time. In this way, power consumption of the first terminal can be reduced.

With reference to the example, in a possible implementation, the first BeiDou communication parameter includes one or more of a satellite ephemeris orbit parameter, a protocol stack parameter, a satellite channel parameter, a satellite beam information parameter, a BeiDou network device information parameter, a terminal capability information parameter, a compression information parameter, and an application information parameter; and the second BeiDou communication parameter includes one or more of a satellite ephemeris orbit parameter, a protocol stack parameter, a satellite channel parameter, a satellite beam information parameter, a BeiDou network device information parameter, a terminal capability information parameter, a compression information parameter, and an application information parameter.

With reference to the example, in a possible implementation, the first version information includes update time of the first BeiDou communication parameter and/or a version number of the first BeiDou communication parameter; and the second version information includes update time of the second BeiDou communication parameter and/or a version number of the second BeiDou communication parameter.

With reference to the example, in a possible implementation, that the version indicated in the second version information is later than the version indicated in the first version information includes: The update time of the second BeiDou communication parameter is later than the update time of the first BeiDou communication parameter, or the version number of the second BeiDou communication parameter is later than the version number of the first BeiDou communication parameter.

According to a second example, a parameter update method in a BeiDou communication system is provided. The method may include: A first terminal establishes a communication connection to a second terminal, where the first terminal does not camp on a cellular network, and the first terminal is locally configured with a first BeiDou communication parameter and stores first version information of the first BeiDou communication parameter; the first terminal obtains second version information of a second BeiDou communication parameter in the second terminal; when a version indicated in the second version information is later than a version indicated in the first version information, the first terminal obtains the second BeiDou communication parameter in the second terminal; and the first terminal updates the locally configured first BeiDou communication parameter to the second BeiDou communication parameter.

A manner of establishing the communication connection between the first terminal and the second terminal includes but is not limited to establishing the communication connection between the first terminal and the second terminal through Bluetooth, and establishing the communication connection between the first terminal and the second terminal through vehicle wireless communication.

In this way, when the first terminal does not camp on the cellular network, the BeiDou communication parameter can also be updated. Before communicating with a BeiDou network device, the first terminal can update, in time, a related parameter that enables the terminal to normally communicate with the BeiDou network device. In addition, the first terminal first compares version information, and the terminal obtains a BeiDou communication parameter in a server only when a version of the BeiDou communication parameter in the server is later than a version of a BeiDou communication parameter in the terminal. In this way, it can be avoided that the first terminal still updates the parameter when versions of the first BeiDou communication parameter and the second BeiDou communication parameter are the same. In this way, power consumption of the first terminal can be reduced.

With reference to the second example, in a possible implementation, the first BeiDou communication parameter and the second BeiDou communication parameter indicate a data transmission format and a data transmission rate used when the first terminal communicates with the BeiDou network device.

With reference to the second example, in a possible implementation, the first BeiDou communication parameter and the second BeiDou communication parameter include a key parameter and a non-key parameter, and the key parameter carries a first identifier; the key parameter is sent by the server to the terminal at a first moment, and the non-key parameter is sent by the server to the terminal at a second moment; and the second moment is later than the first moment. Because the non-key parameter does not affect performance of communication between the first terminal and the BeiDou network device, the non-key parameter may be updated later, and does not need to be updated in real time. In this way, power consumption of the first terminal can be reduced.

With reference to the second example, in a possible implementation, the first BeiDou communication parameter includes one or more of a satellite ephemeris orbit parameter, a protocol stack parameter, a satellite channel parameter, a satellite beam information parameter, a BeiDou network device information parameter, a terminal capability information parameter, a compression information parameter, and an application information parameter; and the second BeiDou communication parameter includes one or more of a satellite ephemeris orbit parameter, a protocol stack parameter, a satellite channel parameter, a satellite beam information parameter, a BeiDou network device information parameter, a terminal capability information parameter, a compression information parameter, and an application information parameter.

With reference to the second example, in a possible implementation, the first version information includes update time of the first BeiDou communication parameter and/or a version number of the first BeiDou communication parameter; and the second version information includes update time of the second BeiDou communication parameter and/or a version number of the second BeiDou communication parameter.

With reference to the second example, in a possible implementation, that the version indicated in the second version information is later than the version indicated in the first version information includes: The update time of the second BeiDou communication parameter is later than the update time of the first BeiDou communication parameter, or the version number of the second BeiDou communication parameter is later than the version number of the first BeiDou communication parameter.

With reference to the second example, in a possible implementation, after the first terminal updates the locally configured first BeiDou communication parameter to the second BeiDou communication parameter, the method may further include: The first terminal communicates with the BeiDou network device based on the second BeiDou communication parameter.

According to a third example, a BeiDou parameter update system is provided. The system may include a first terminal and a server. Specifically,
the first terminal is configured to: obtain first version information of a locally configured first BeiDou communication parameter when the first terminal meets a first condition, where the first condition includes that the first terminal leaves a resident location within preset duration; obtain, from the server, second version information of a second BeiDou communication parameter in the server; when a version indicated in the second version information is later than a version indicated in the first version information, obtain the second BeiDou communication parameter in the server; and update the locally configured first BeiDou communication parameter to the second BeiDou communication parameter.

The server is configured to: send the second BeiDou communication parameter to the first terminal based on a first request sent by the first terminal, where the first BeiDou communication parameter is locally configured on the first terminal, and the version of the second BeiDou communication parameter is later than the version of the first BeiDou communication parameter; and store a BeiDou communication parameter and version information of the BeiDou communication parameter.

In a possible implementation, the first terminal is configured to perform the method according to any one of the possible implementations of the first aspect and the second example.

In a possible implementation, the server is configured to perform the method according to any one of the possible implementations of the example.

According to a second example, this application provides a communication apparatus, including one or more processors, one or more memories, and a transceiver. The transceiver and the one or more memories are coupled to the one or more processors. The one or more memories are configured to store computer program code. The computer program code includes computer instructions. When the one or more processors execute the computer instructions, the communication apparatus is enabled to perform the method according to any one of the possible implementations of the first aspect and the second example.

The communication apparatus may be a terminal or a device in another product form.

According to a fourth example, this application provides a communication apparatus, including one or more processors, one or more memories, and a transceiver. The transceiver and the one or more memories are coupled to the one or more processors. The one or more memories are configured to store computer program code. The computer program code includes computer instructions. When the one or more processors execute the computer instructions, the communication apparatus is enabled to perform the method according to any one of the possible implementations of the example.

The communication apparatus may be a server, or any network element or a combination of a plurality of network elements in the server.

According to a third aspect, this application provides a computer storage medium, including computer instructions. When the computer instructions are run on a computer, the computer is enabled to perform the method according to any one of the possible implementations of the first aspect and the second example.

According to a fifth example, this application provides a computer storage medium, including computer instructions. When the computer instructions are run on a computer, the computer is enabled to perform the method according to any one of the possible implementations of the example.

According to a sixth example, this application provides a computer program product. When the computer program product runs on a computer, the computer is enabled to perform the method according to any one of the possible implementations of the first aspect and the second example.

According to a seventh example, this application provides a computer program product. When the computer program product runs on a computer, the computer is enabled to perform the method according to any one of the possible implementations of the example.

According to a fourth aspect, this application provides a chip or a chip system, applied to a terminal and including a processing circuit and an interface circuit. The interface circuit is configured to receive code instructions and transmit the code instructions to the processing circuit. The processing circuit is configured to run the code instructions to perform the method according to any one of the possible implementations of the first aspect and the second example.

### BRIEF DESCRIPTION OF DRAWINGS

FIG. 1 is a schematic diagram of an architecture of a BeiDou communication system 10 according to an embodiment of this application;
FIG. 2 is a schematic diagram of a data outbound and inbound transmission process in a BeiDou communication system according to an embodiment of this application;
FIG. 3A to FIG. 3C are a schematic diagram of a protocol encapsulation architecture for inbound data of a BeiDou communication system 10 according to an embodiment of this application;
FIG. 4A to FIG. 4C are a schematic diagram of a protocol parsing architecture for inbound data of a BeiDou communication system 10 according to an embodiment of this application;
FIG. 5A to FIG. 5D are a schematic diagram of a protocol encapsulation architecture for outbound data of a BeiDou communication system 10 according to an embodiment of this application;
FIG. 6A to FIG. 6C are a schematic diagram of a protocol parsing architecture for outbound data of a BeiDou communication system 10 according to an embodiment of this application;
FIG. 7 is a schematic diagram of related parameters in a BeiDou communication system 10 according to an embodiment of this application;
FIG. 8 is a schematic diagram of an architecture of a parameter update system 20 for updating a related parameter in a BeiDou communication system according to an embodiment of this application;
FIG. 9A and FIG. 9B are a schematic flowchart of a parameter update method according to an embodiment of this application;
FIG. 10 is a schematic flowchart of another parameter update method according to an embodiment of this application;
FIG. 11 is a schematic diagram of a structure of a terminal 100 according to an embodiment of this application;
FIG. 12 is a schematic diagram of a structure of a communication apparatus according to an embodiment of this application;
FIG. 13 is a schematic diagram of a structure of another communication apparatus according to an embodiment of this application;
FIG. 14 is a schematic diagram of a structure of another communication apparatus according to an embodiment of this application; and
FIG. 15 is a schematic diagram of a structure of another communication apparatus according to an embodiment of this application.

### DESCRIPTION OF EMBODIMENTS

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. It should also be understood that the term "and/or" used in this application means and includes any or all possible combinations of one or more listed items.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

**The following describes a BeiDou communication system 10 according to an embodiment of this application.**

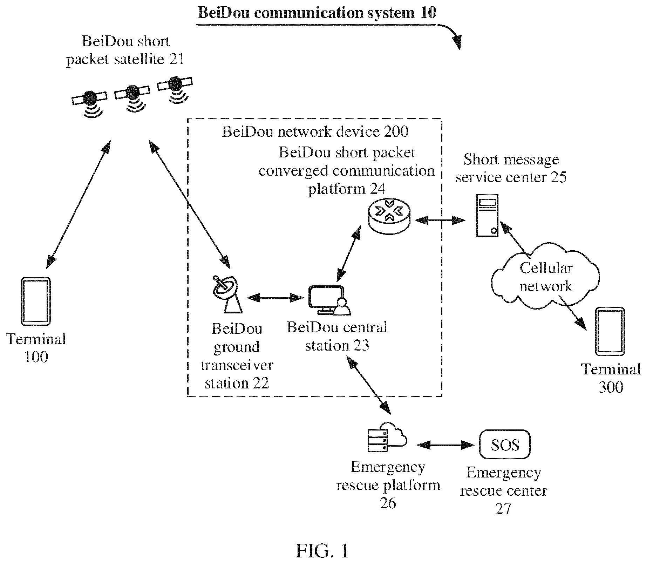

FIG. 1 is a schematic diagram of an architecture of the BeiDou communication system 10 according to an embodiment of this application.

As shown in FIG. 1, the BeiDou communication system 10 may include a terminal 100, a BeiDou short packet satellite 21, a BeiDou network device 200, a short message service center 25, and a terminal 300. Optionally, the BeiDou communication system 10 may further include an emergency rescue platform 26 and an emergency rescue center 27.

The terminal 100 may send short packet information to the BeiDou short packet satellite 21, and the BeiDou short packet satellite 21 only performs relay, and directly forwards the short packet information sent by the terminal 100 to the BeiDou network device 200 on the ground. The BeiDou network device 200 may parse, according to a BeiDou communication protocol, the short packet information forwarded by the satellite, and forward packet content that is of a general packet type and that is obtained through parsing from the short packet information to the short message service center (short message service center, SMSC) 25. The short message service center 25 may forward the packet content to the terminal 300 through a conventional cellular communication network. The BeiDou network device 200 may also send, through the emergency rescue platform 26 to the emergency rescue center 27, a packet that is of an emergency help type and that is sent by the terminal 100.

The terminal 300 may also send a short message to the short message service center 25 through the conventional cellular communication network. The short message service center 25 may forward the short message from the terminal 300 to the BeiDou network device 200. The BeiDou network device 200 may send the short message from the terminal 300 to the terminal 100 through relay of the BeiDou short packet satellite 21.

The BeiDou network device 200 may include a BeiDou ground transceiver station 22, a BeiDou central station 23, and a BeiDou short packet converged communication platform 24. The BeiDou ground transceiver station 22 may include one or more devices having a sending function and one or more devices having a receiving function, or may include one or more devices having a sending function and a receiving function. This is not limited herein. The BeiDou ground transceiver station 22 may be used for a data processing function of the BeiDou network device 200 at a physical (physical layer protocol, PHY) layer. The BeiDou central station 23 may be used for a data processing function of the BeiDou network device 200 at a satellite link control (satellite link control protocol, SLC) layer and a message convergence protocol (message data convergence protocol, MDCP) layer. The BeiDou short packet converged communication platform 24 may be used for a data processing function at an application (application layer protocol, APP) layer.

Because the BeiDou communication system 10 performs communication through a satellite link, main characteristics of the BeiDou communication system 10 are a long delay (about 270 ms in one direction) and a large link loss. Currently, services supported by the BeiDou communication system 10 are mainly burst short message services, and link state management, mobility management, broadcast control information, and the like are not supported.

A working mode of the BeiDou network device 200 may be a duplex mode, and data may be sent and received simultaneously.

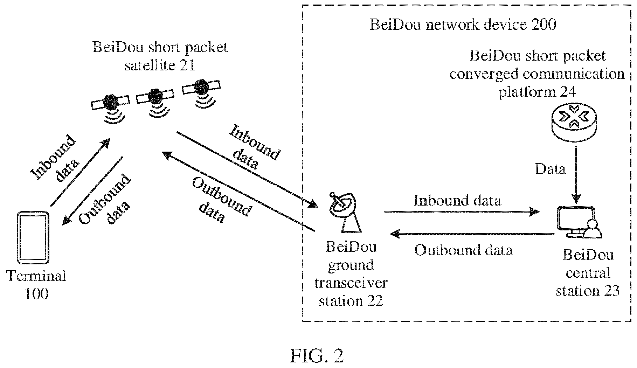

In embodiments of this application, that the terminal 100 sends data to the BeiDou network device 200 may be referred to as data inbound, and the data sent by the terminal 100 to the BeiDou network device 200 may be referred to as inbound data. That the BeiDou network device 200 sends data to the terminal 100 may be referred to as data outbound, and the data sent by the BeiDou network device 200 to the terminal 100 may be referred to as outbound data. As shown in FIG. 2, the terminal 100 may send inbound data to the BeiDou short packet satellite 21. The BeiDou short packet satellite 21 then sends the inbound data to the BeiDou ground transceiver station 22. The BeiDou ground transceiver station 22 may send the inbound data to the BeiDou central station 23. The BeiDou central station 23 in the BeiDou network device 200 may send outbound data to the BeiDou ground transceiver station 22. Then, the BeiDou ground transceiver station 22 sends the outbound data to the BeiDou short packet satellite 21, and the BeiDou short packet satellite 21 sends the outbound data to the terminal 100.

**The following describes a protocol encapsulation architecture for inbound data of a BeiDou communication system 10 according to an embodiment of this application.**

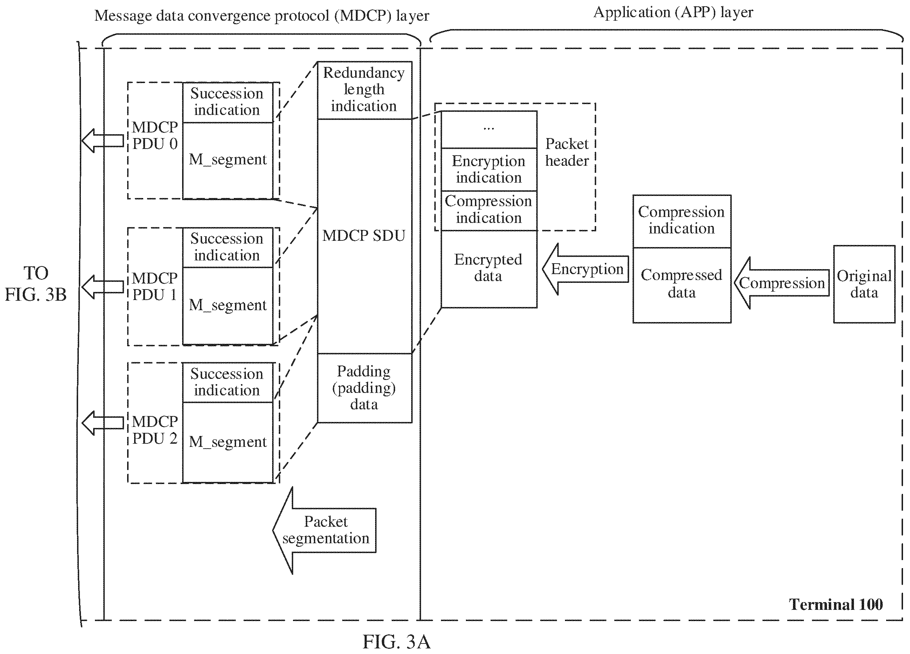

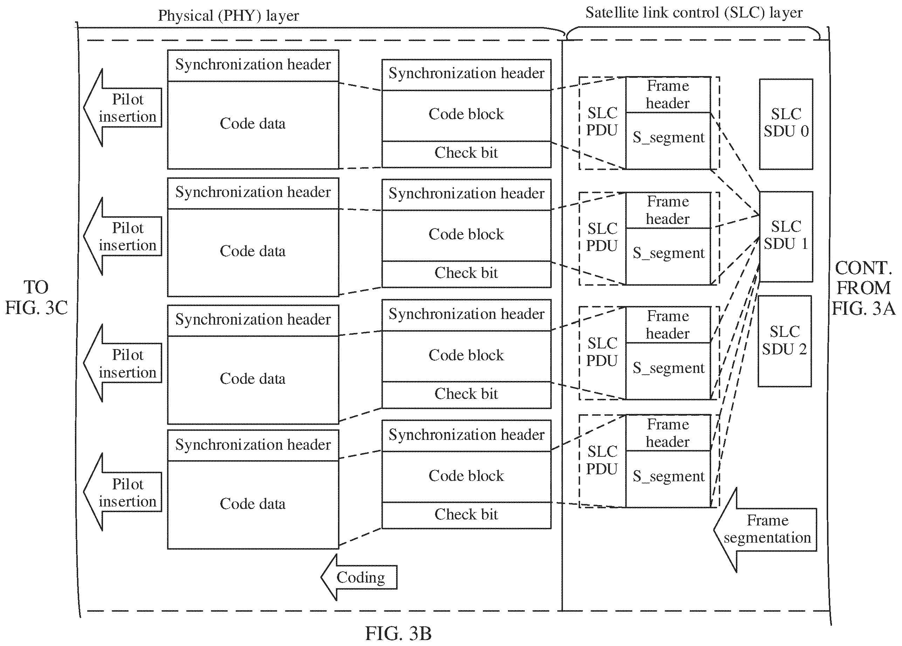

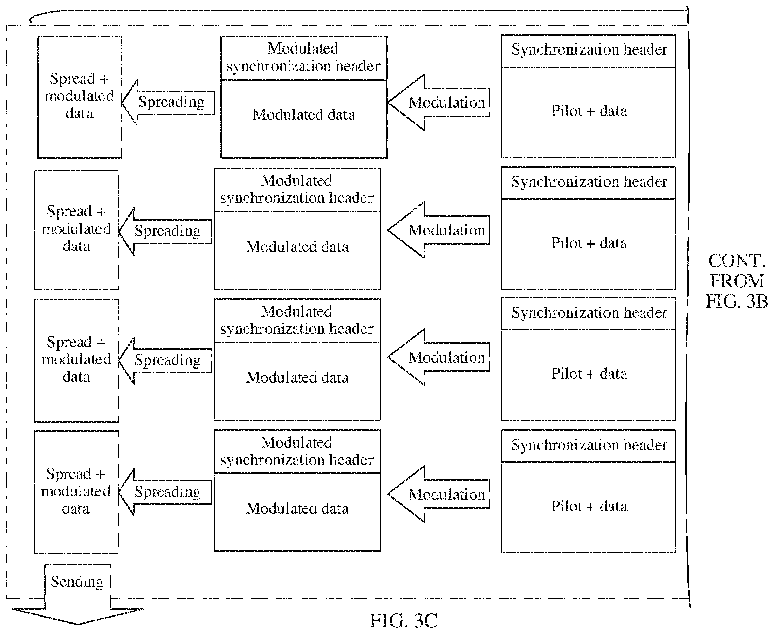

FIG. 3A to FIG. 3C are a schematic diagram of the protocol encapsulation architecture for the inbound data of the BeiDou communication system 10 according to an embodiment of this application.

As shown in FIG. 3A to FIG. 3C, a BeiDou packet transmission protocol layer of a terminal 100 may be divided into an application (application layer protocol, APP) layer, a message data convergence protocol (message data convergence protocol, MDCP) layer, a satellite link control (satellite link control protocol, SLC) layer, and a physical (physical layer protocol, PHY) layer.

When the terminal 100 sends data to a BeiDou network device 200, a working procedure of the BeiDou packet transmission protocol of the terminal 100 may be as follows:

At the APP layer, the terminal 100 may compress original data into compressed data according to a compression algorithm, and add a compression indicator field before the compressed data, where the compression indicator field may indicate a compression algorithm type of the compressed data. Then, the terminal 100 may encrypt the compressed data to obtain encrypted data, and add an encryption algorithm field to a header of the encrypted data, where the encryption algorithm field indicates an encryption algorithm type of the encrypted data. The terminal 100 may encapsulate the encrypted data, the compression indicator field, and the encryption indicator field into an application layer packet and deliver the application layer packet to the MDCP layer. The application layer packet includes a packet header and packet data. The packet header includes the compression indicator field, the encryption indicator field, and the like. The packet data includes the encrypted data.

Optionally, the terminal 100 may encrypt the compression indicator field and the compressed data together, to obtain encrypted data.

At the MDCP layer, the terminal 100 may obtain, through an inter-layer interface, the application layer packet delivered by the APP layer, and use the application layer packet as an MDCP service data unit (service data unit, SDU). At the MDCP layer, the terminal 100 may add padding (padding) data to a tail of the MDCP SDU to a specified length, and add a redundancy length indicator field to a header of the MDCP SDU. The redundancy length indicator field may indicate a length of the padding data. The terminal 100 may segment the padding data and the MDCP SDU to which the redundancy length indicator field is added into one or more pieces of fixed-length MDCP segment data (M_segment), and add a succession indicator field to a header of each piece of MDCP segment data, to obtain an MDCP protocol data unit (protocol data unit, PDU). That is, the MDCP PDU includes M_segment and the succession indicator field. The succession indicator field may indicate that a current MDCP PDU is a first MDCP PDU, an intermediate MDCP PDU, or a last MDCP PDU of a plurality of consecutively sent MDCP PDUs, or an MDCP PDU that is sent separately.

At the SLC layer, the terminal 100 may obtain, through an inter-layer interface, the MDCP PDU delivered by the MDCP layer, and use the MDCP PDU as an SLC SDU. At the SLC layer, the terminal 100 may segment the SLC SDU into one or more (at most four) pieces of fixed-length SLC segment data (S_segment), and add frame header information to a header of each S_segment, to obtain an SLC PDU. The frame header information includes a service data unit alternated indicator (service data unit alternated Indicator, SAI) field, a total frame quantity field, and a frame sequence number field.

The SAI field may indicate whether the SLC PDU belongs to an SLC SDU that is not sent.

The total frame quantity field may indicate a total quantity of SLC PDUs included in the SLC SDU to which the SLC PDU belongs.

The frame sequence number field may indicate a sequence number of the SLC PDU in the SLC SDU to which the SLC PDU belongs.

At the PHY layer, the terminal 100 may obtain, through an inter-layer interface, the SLC PDU delivered by the SLC layer, use the SLC PDU as a code block (code block) of the PHY layer, add a synchronization header to a header of the code block, and add a check bit field to a tail of the code block. In the BeiDou communication system 10, the code block may be checked through cyclic redundancy check (cyclic redundancy check, CRC). Therefore, the check bit field may include CRC code. The terminal 100 may perform coding (for example, polar coding) on the code block and the check bit field to obtain coded data (coded data), and then insert a pilot into the coded data to obtain pilot coded data (pilot + data). Then, the terminal 100 sequentially modulates the synchronization header and the pilot coded data by using bottom-layer hardware to obtain modulated data (modulated data). The terminal 100 may perform spreading on the modulated data to obtain spread modulated data (spread + modulated data). The terminal 100 may send the spread modulated data to a BeiDou short packet satellite 21, and the BeiDou short packet satellite 21 relays and forwards the data to the BeiDou network device 200.

**The following describes a protocol parsing architecture for inbound data of a BeiDou communication system 10 according to an embodiment of this application.**

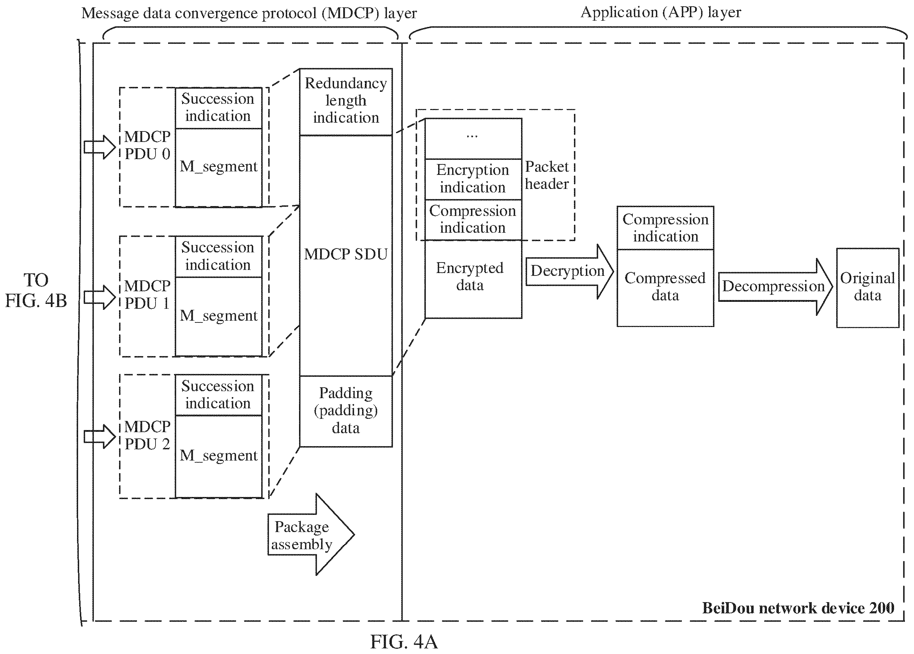

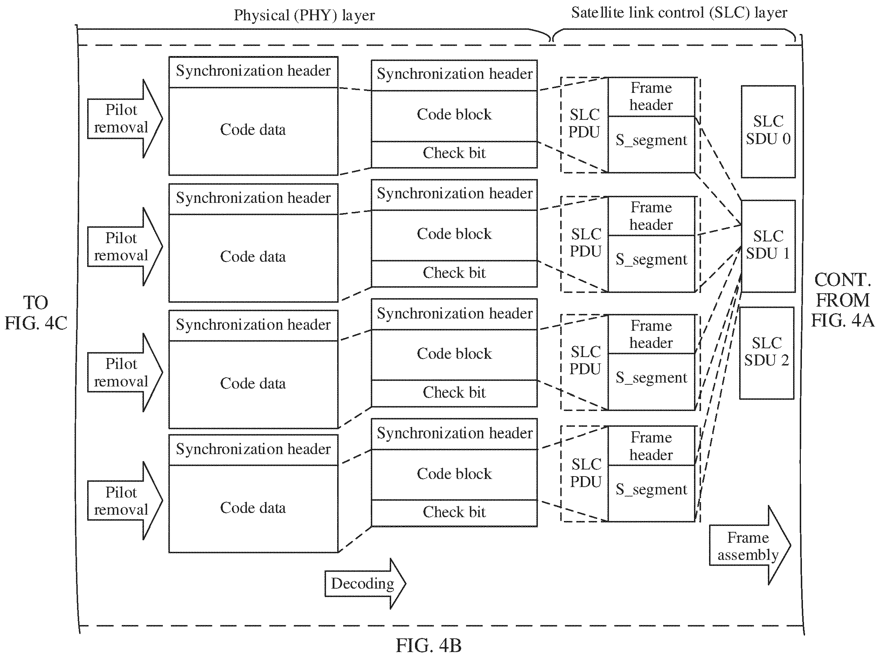

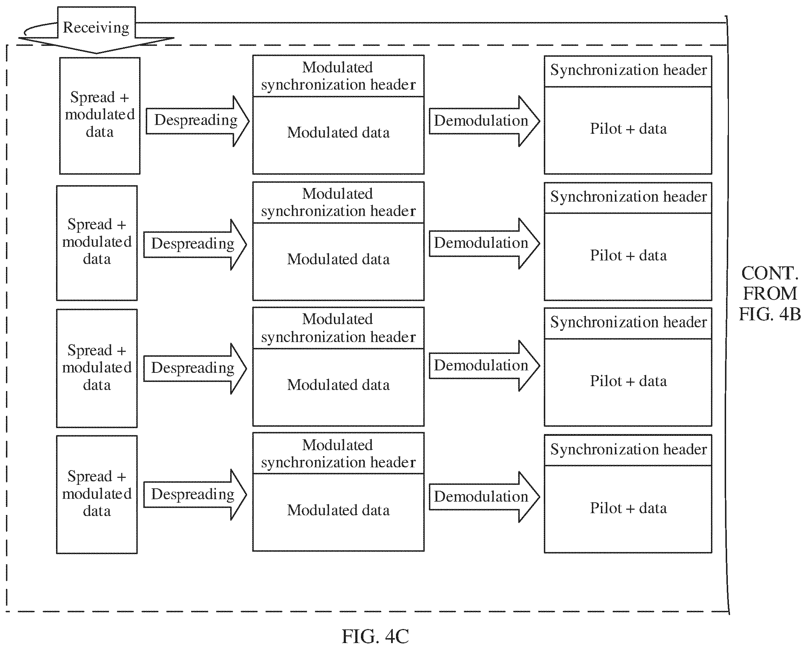

FIG. 4A to FIG. 4C are a schematic diagram of the protocol parsing architecture for the inbound data of the BeiDou communication system 10 according to an embodiment of this application.

As shown in FIG. 4A to FIG. 4C, a BeiDou short packet transmission protocol layer of a BeiDou network device 200 may be divided into an application (application layer protocol, APP) layer, a message data convergence protocol (message data convergence protocol, MDCP) layer, a satellite link control (satellite link control protocol, SLC) layer, and a physical (physical layer protocol, PHY) layer. The BeiDou network device 200 may include a BeiDou ground transceiver station 22, a BeiDou central station 23, and a BeiDou short packet converged communication platform 24. The BeiDou ground transceiver station 22 may be responsible for protocol processing at the PHY layer. The BeiDou central station 23 may be responsible for protocol processing at the SLC layer and the MDCP layer. The BeiDou short packet converged communication platform 24 may be responsible for protocol processing at the APP layer.

When the BeiDou network device 200 receives data sent by a terminal 100, a working procedure of the BeiDou short packet transmission protocol layer of the BeiDou network device 200 may be as follows:

At the PHY layer, the BeiDou network device 200 may obtain pilot coded data that is sent by the terminal 100 and that is modulated and spread. The BeiDou network device 200 may perform despreading on received spread modulated data (spread + modulated data), to obtain modulated data (modulated data). Then, the BeiDou network device 200 may demodulate the modulated data, to obtain the pilot coded data (pilot + data). Then, the BeiDou network device 200 removes pilot information from the pilot coded data, to obtain coded data (code data). Then, the BeiDou network device 200 may decode the coded data, and verify integrity of a code block (code block) based on check data in a check bit field. If the code block is complete, the BeiDou network device 200 may extract the code block (code block), and deliver the code block to the SLC layer through an inter-layer interface, where the code block is used as an SLC PDU of the SLC layer.

At the SLC layer, the BeiDou network device 200 may concatenate, based on frame header information of an SLC PDU, SLC PDUs belonging to a same SLC SDU into one SLC SDU. The BeiDou network device 200 may deliver the SLC SDU to the MDCP layer through an inter-layer interface, where the SLC SDU is used as an MDCP PDU of the MDCP layer.

At the MDCP layer, the BeiDou network device 200 may concatenate all MDCP PDUs belonging to a same MDCP SDU into one MDCP SDU. The BeiDou network device 200 may deliver the MDCP SDU to the APP layer through an inter-layer interface, where the MDCP SDU is used as an application layer packet received by the APP layer.

At the APP layer, the BeiDou network device 200 may decrypt and decompress the application layer packet based on a packet header of the application layer packet, to obtain original data.

In this embodiment of this application, the foregoing protocol processing process is merely an example for description, and a specific operation of protocol processing is not limited in this application.

**The following describes a protocol encapsulation architecture for outbound data of a BeiDou communication system 10 according to an embodiment of this application.**

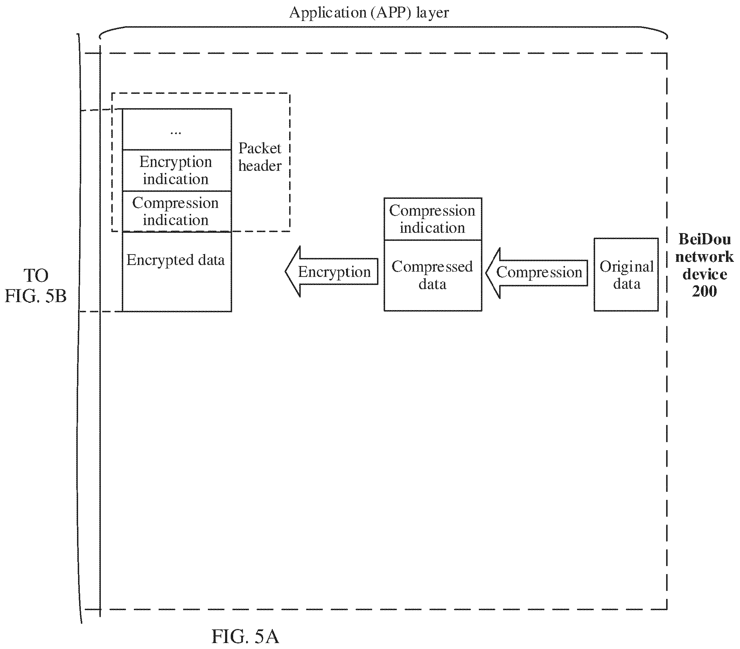

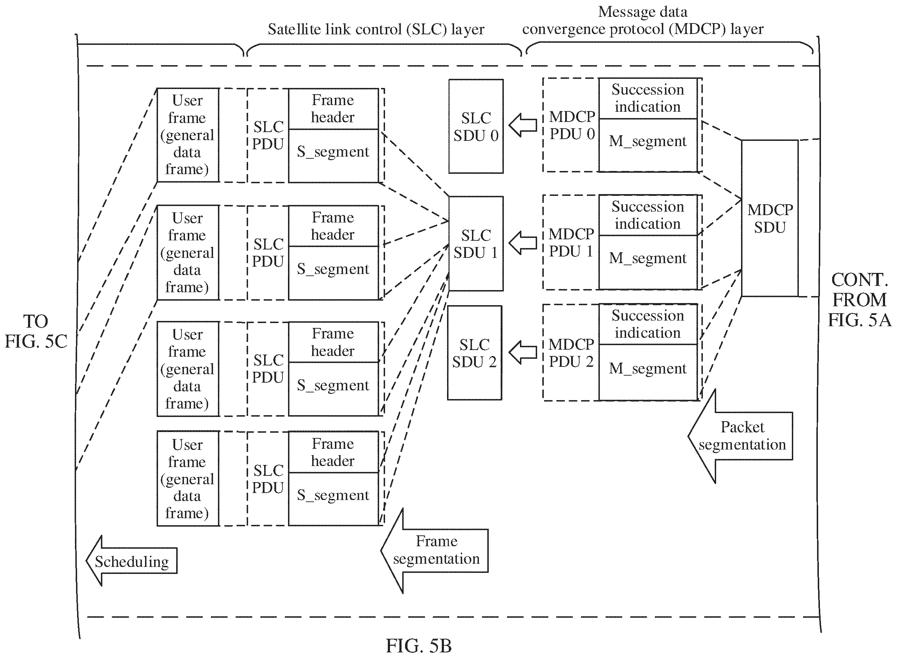

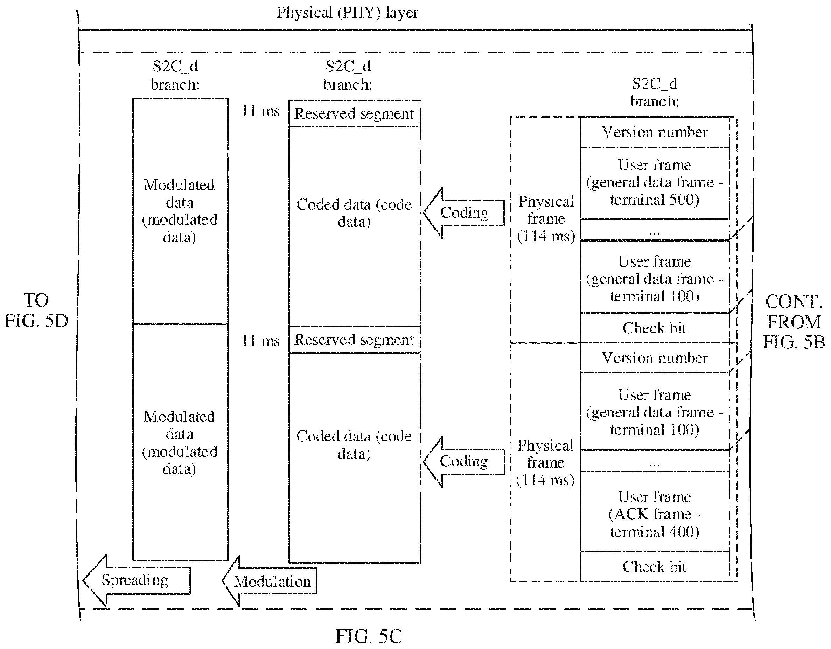

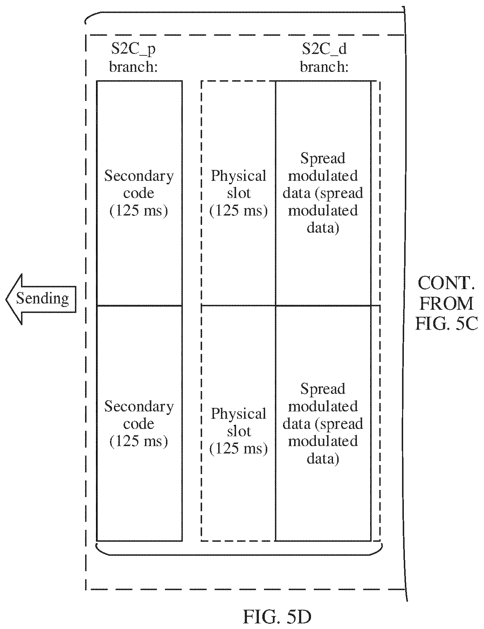

FIG. 5A to FIG. 5D are a schematic diagram of the protocol encapsulation architecture for the outbound data of the BeiDou communication system 10 according to an embodiment of this application.

As shown in FIG. 5A to FIG. 5D, a BeiDou short packet transmission protocol layer of a BeiDou network device 200 may be divided into an application (application layer protocol, APP) layer, a message data convergence protocol (message data convergence protocol, MDCP) layer, a satellite link control (satellite link control protocol, SLC) layer, and a physical (physical layer protocol, PHY) layer. The BeiDou network device 200 may include a BeiDou ground transceiver station 22, a BeiDou central station 23, and a BeiDou short packet converged communication platform 24. The BeiDou ground transceiver station 22 may be responsible for protocol processing at the PHY layer. The BeiDou central station 23 may be responsible for protocol processing at the SLC layer and the MDCP layer. The BeiDou short packet converged communication platform 24 may be responsible for protocol processing at the APP layer.

When the BeiDou network device 200 sends data to a terminal 100, a working procedure of the BeiDou short packet transmission protocol of the BeiDou network device 200 may be as follows:

At the APP layer, the BeiDou network device 200 may compress original data into compressed data according to a compression algorithm, and add a compression indicator field before the compressed data, where the compression indicator field may indicate a compression algorithm type of the compressed data. Then, the BeiDou network device 200 may encrypt the compressed data to obtain encrypted data, and add an encryption algorithm field to a header of the encrypted data, where the encryption algorithm field indicates an encryption algorithm type of the encrypted data. The BeiDou network device 200 may encapsulate the encrypted data, the compression indicator field, and the encryption indicator field into an application layer packet and deliver the application layer packet to the MDCP layer. The application layer packet may include a packet header and packet data. The packet header may include the compression indicator field, the encryption indicator field, and the like. The packet data includes the encrypted data.

Optionally, in a possible implementation, the BeiDou network device 200 segments an MDCP SDU into a plurality of MDCP PDUs at the MDCP layer, and the BeiDou network device 200 may send the plurality of MDCP PDUs to the SLC layer of the BeiDou network device 200.

At the MDCP layer, the BeiDou network device 200 may obtain, through an inter-layer interface, the application layer packet delivered by the APP layer, and use the application layer packet as an MDCP SDU. At the MDCP layer, the BeiDou network device 200 may segment one MDCP SDU into one or more pieces of fixed-length MDCP segment data (M_segment), and add a succession indicator field to a header of each piece of MDCP segment data, to obtain an MDCP PDU. That is, the MDCP PDU includes the M_segment field and the succession indicator field. The succession indicator field may indicate that a current MDCP PDU is a first MDCP PDU, an intermediate MDCP PDU, or a last MDCP PDU of a plurality of consecutively sent MDCP PDUs, or an MDCP PDU that is sent separately.

At the SLC layer, the BeiDou network device 200 may obtain, through an inter-layer interface, the MDCP PDU delivered by the MDCP layer, and use the MDCP PDU as an SLC SDU. At the SLC layer, the BeiDou network device 200 may segment the SLC SDU into one or more (at most four) pieces of fixed-length SLC segment data (S_segment), and add frame header information to a header of each S_segment, to obtain an SLC PDU.

At the PHY layer, the BeiDou network device 200 may obtain, through an inter-layer interface, the SLC PDU delivered by the SLC layer. The BeiDou network device 200 may obtain an SLC PDU of one or more users from the SLC layer. The BeiDou network device 200 may concatenate SLC PDUs of a plurality of users, add a frame header (for example, a version number) of a physical frame to use the SLC PDUs as a code block (code block) of the PHY layer, add a check bit (for example, cyclic redundancy check (cyclic redundancy check, CRC) code) to a tail of the code block, and perform coding (for example, polar coding) on the code block and the CRC code. The coded physical frame and a reserved segment may form coded data of a telegraphic message branch (S2C_d branch) of a physical slot of a fixed length. The BeiDou network device 200 may separately place a plurality of SLC PDUs of one user into different physical frames. Then, the BeiDou network device 200 combines the coded data of the S2C_d branch and pilot information of a pilot branch (S2C_p branch) into pilot coded data, that is, outbound data. The BeiDou network device 200 may send the outbound data to the BeiDou short packet satellite 21, and the BeiDou short packet satellite 21 relays and forwards the outbound data to the terminal 100.

It may be understood that the pilot information of the S2C_p branch is related to a satellite beam. When a satellite beam number is known information, the pilot information of the S2C_p branch is also known and does not need to be decoded. The coded data of the S2C_d branch needs to be decoded.

**The following describes a protocol parsing architecture for outbound data of a BeiDou communication system 10 according to an embodiment of this application.**

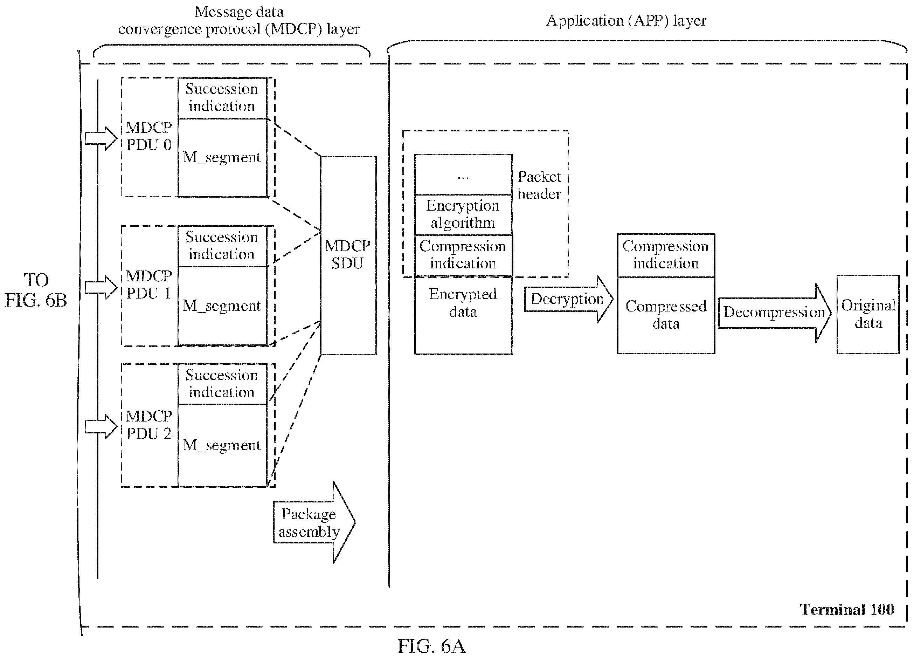

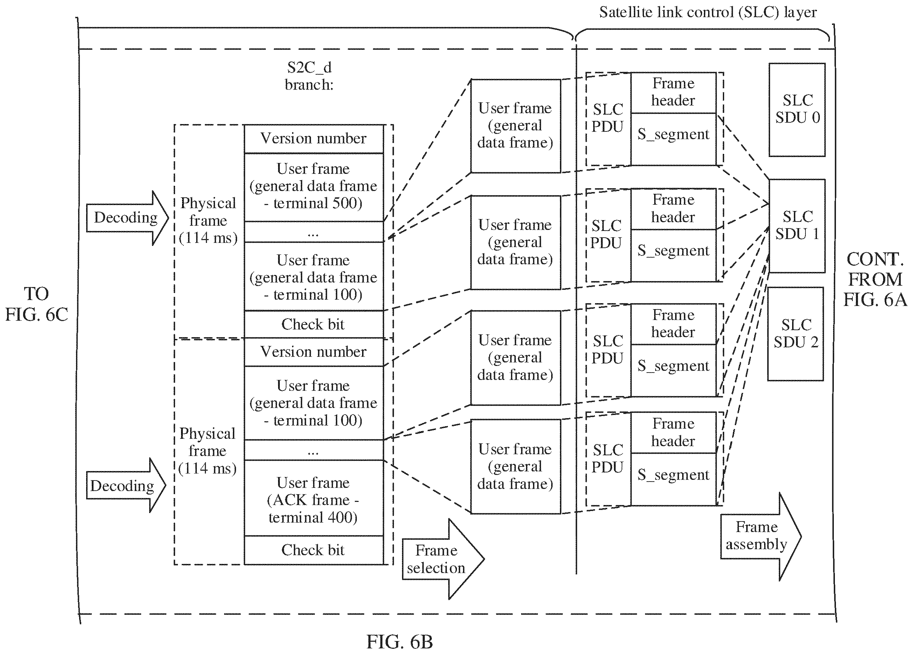

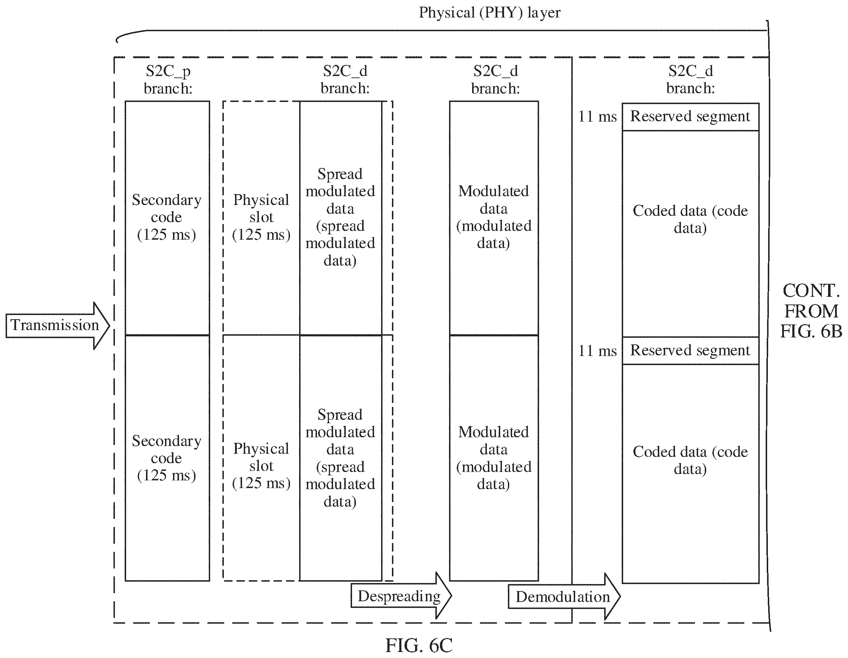

FIG. 6A to FIG. 6C are a schematic diagram of the protocol parsing architecture for the outbound data of the BeiDou communication system 10 according to an embodiment of this application.

As shown in FIG. 6A to FIG. 6C, a BeiDou short packet transmission protocol layer of a terminal 100 may be divided into an application (application layer protocol, APP) layer, a message data convergence protocol (message data convergence protocol, MDCP) layer, a satellite link control (satellite link control protocol, SLC) layer, and a physical (physical layer protocol, PHY) layer.

When the terminal 100 receives data sent by a BeiDou network device, a working procedure of the BeiDou short packet transmission protocol layer of the terminal 100 may be as follows:

At the PHY layer, the terminal 100 may obtain pilot coded data that is sent by the BeiDou network device 200 and that is modulated and spread. The terminal 100 may perform despreading on received spread modulated data (spread + modulated data), to obtain modulated data (modulated data). Then, the terminal 100 may demodulate the modulated data, to obtain the pilot coded data (pilot + data). Then, the terminal 100 may remove pilot information from the pilot coded data to obtain coded data (code data). Then, the terminal 100 may decode the coded data, and verify integrity of a code block (code block) based on check data in a check bit field. If the code block is complete, the terminal 100 may extract the code block (code block), and deliver the code block to the SLC layer through an inter-layer interface, where the code block is used as an SLC PDU of the SLC layer.

Herein, the pilot coded data is outbound data sent by the BeiDou network device 200, and the outbound data includes coded data of an S2C_d branch and pilot information of a pilot branch (S2C_p branch).

At the SLC layer, the terminal 100 may concatenate, based on frame header information of an SLC PDU, SLC PDUs belonging to a same SLC SDU into one SLC SDU. The terminal 100 may deliver the SLC SDU to the MDCP layer through an inter-layer interface, where the SLC SDU is used as an MDCP PDU of the MDCP layer.

At the MDCP layer, the terminal 100 may concatenate all MDCP PDUs belonging to a same MDCP SDU into one MDCP SDU. The terminal 100 may deliver the MDCP SDU to the APP layer through an inter-layer interface, where the MDCP SDU is used as an application layer packet received by the APP layer.

At the APP layer, the terminal 100 may decrypt and decompress the application layer packet based on a packet header of the application layer packet, to obtain original data.

In this embodiment of this application, the foregoing protocol processing process is merely an example for description, and a specific operation of protocol processing is not limited in this application.

In the BeiDou communication system 10 shown in embodiments of this application, both the BeiDou network device 200 and the terminal 100 are configured with a related parameter in the BeiDou communication system 10 (referred to as a BeiDou communication parameter for short). The BeiDou communication parameter may be used by the terminal 100 to communicate with the BeiDou network device 200 in a BeiDou network. For example, the BeiDou communication parameter configured in the terminal 100 may indicate a format and a rate at which the terminal 100 sends data to the BeiDou network device 200, and may indicate how the terminal 100 encapsulates data, how the terminal 100 parses data sent by the BeiDou network device 200 to the terminal 100, and the like. The BeiDou communication parameter configured in the BeiDou network device 200 may indicate a format and a rate at which the BeiDou network device 200 sends data, and may indicate how the BeiDou network device 200 encapsulates data, how the BeiDou network device 200 parses data sent by the terminal 100, and the like.

In embodiments of this application, a BeiDou communication parameter that carries a first identifier may be referred to as a key parameter, and a BeiDou communication parameter that does not carry a first identifier may be referred to as a non-key parameter. In some examples, the non-key parameter has great impact on communication performance of the BeiDou communication system 10, and the non-key parameter has little impact on the communication performance of the BeiDou communication system 10.

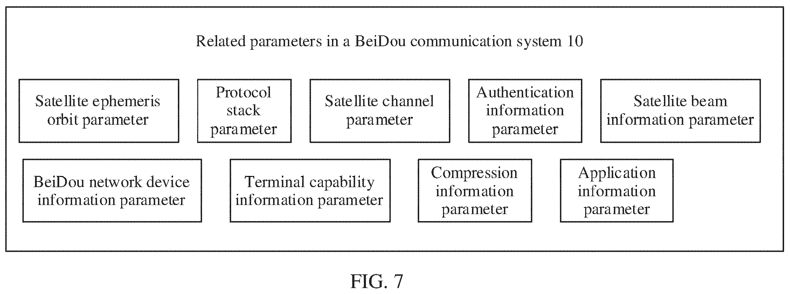

For example, FIG. 7 shows BeiDou communication parameters in the BeiDou communication system 10. As shown in FIG. 7, in the BeiDou communication system 10, the BeiDou communication parameters may include: a satellite ephemeris orbit parameter, a protocol stack parameter, a satellite channel parameter, an authentication information parameter, a satellite beam information parameter, a BeiDou network device information parameter, a terminal capability information parameter, a compression information parameter, an application information parameter, and the like.

The satellite ephemeris orbit parameter may indicate a moving speed, a moving direction, coordinates, and the like of a satellite.

The satellite channel parameter may indicate a transmission frequency, a rate, a bandwidth, a slot, and the like of a satellite channel.

The satellite beam information parameter may indicate a coverage area of a satellite beam, a frequency of a satellite beam, and the like.

The protocol stack parameter may indicate performance of communication transmission between the terminal 100 and the BeiDou network device 200. The protocol stack parameter may include related parameters that affect data inbound communication transmission performance and data outbound communication transmission performance, for example, parameters such as an outbound and inbound transmission mode, a quantity of retransmissions, and a maximum quantity of frames at the SLC layer.

The authentication information parameter ensures that an authentication function in the BeiDou communication system takes effect. The authentication information parameter may include a domain name address of an authentication server and an operator's public land mobile network (public land mobile network, PLMN).

The BeiDou network device information parameter may indicate a transmission capability of the BeiDou network device. For example, the BeiDou network device information parameter may include transmit power of the BeiDou network device and a length (for example, a frame header length or a frame header design) of a BeiDou short packet.

The terminal capability information parameter may indicate a transmission capability of the terminal 100. The terminal capability information parameter may include parameters such as transmit power of the terminal and a bandwidth supported by the terminal.

The application information parameter indicates related parameters of the application layer, such as an encryption parameter, a compression parameter, and use of authentication code.

The compression information parameter may indicate information about compressing a field in an application layer packet or an SLC layer user frame, for example, compressing a field (for example, a user ID field) that indicates a transmitter number in the SLC layer user frame, and compressing a field that indicates a receiver number in the application layer packet.

In some related parameters in the BeiDou communication system 10 (referred to as BeiDou communication parameters) shown in FIG. 7, the first identifier may be carried in the satellite ephemeris orbit parameter, the satellite channel parameter, the satellite beam information parameter, and the protocol stack parameter. In other words, the satellite ephemeris orbit parameter, the satellite channel parameter, the satellite beam information parameter, and the protocol stack parameter may be referred to as key parameters. Other parameters, such as the authentication information parameter, the BeiDou network device information parameter, the terminal capability information parameter, the compression information parameter, and the application information parameter, may be referred to as non-key parameters.

Some related parameters in the BeiDou communication system 10 change. Therefore, the foregoing parameters configured in the BeiDou network device 200 and the terminal 100 need to be updated. For example, the satellite ephemeris orbit parameter, the satellite channel parameter, and the satellite beam information parameter in the BeiDou communication system 10 may change due to movement of a satellite. Parameters such as the protocol stack parameter, the authentication information parameter, the compression information parameter, and the application information parameter may change with an upgrade of a communication protocol in the BeiDou communication system 10. When a parameter of the BeiDou network device 200 is inconsistent with a parameter of the terminal 100, normal communication between the terminal 100 and the BeiDou network device 200 is affected. For example, the terminal 100 may fail to correctly decode data sent by the BeiDou network device 200, and the BeiDou network device 200 also fails to correctly decode data sent by the terminal 100. In this way, after the parameter in the BeiDou network device 200 is updated, the terminal 100 also needs to update the parameter in time.

In embodiments of this application, the terminal 100 may obtain an updated parameter through a cloud server or a nearby BeiDou terminal. The cloud server may obtain the updated parameter from a BeiDou parameter publishing server 29.

The following describes a parameter update system 20 provided in embodiments of this application with reference to the accompanying drawings.

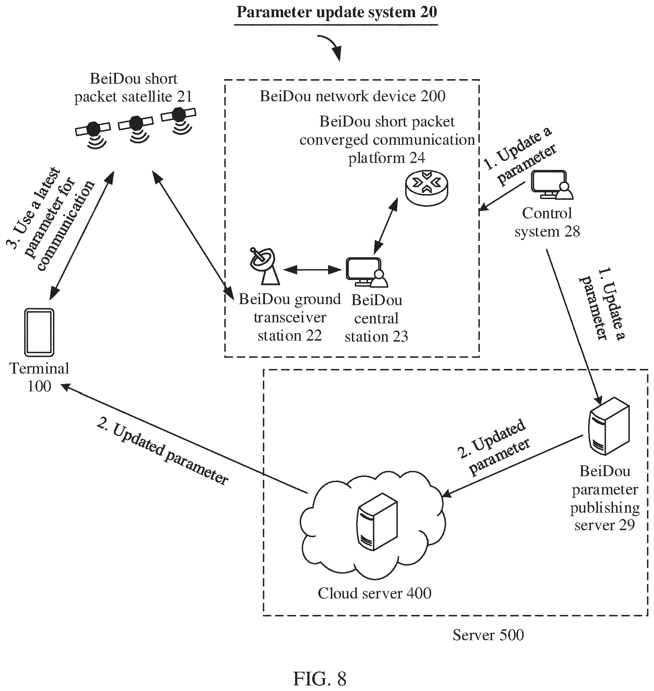

FIG. 8 shows an example of the parameter update system 20 according to an embodiment of this application. As shown in FIG. 8, the parameter update system 20 may include a terminal 100, a BeiDou short packet satellite 21, a BeiDou network device 200, a control system 28, and a server 500. The server 500 may include a BeiDou parameter publishing server 29 and a cloud server 400.

A BeiDou communication parameter is configured for the terminal 100 and the BeiDou network device 200. The BeiDou communication parameter may be used by the terminal 100 to communicate with the BeiDou network device 200 in a BeiDou network.

The BeiDou parameter publishing server 29 stores the BeiDou communication parameter. The cloud server 400 stores the BeiDou communication parameter.

After receiving a parameter update indication, the control system 28 may send the BeiDou communication parameter of a latest version to the BeiDou network device 200 and the BeiDou parameter publishing server 29.

The control system 28 may further indicate the BeiDou network device 200 to update the configured BeiDou communication parameter to the BeiDou communication parameter of the latest version, and indicate the BeiDou parameter publishing server 29 to update the stored BeiDou communication parameter to the BeiDou communication parameter of the latest version.

Optionally, the parameter update indication received by the control system 28 may be an indication entered by a research and development engineer in the control system 28.

The BeiDou parameter publishing server 29 may send the updated BeiDou communication parameter to the cloud server 400.

Optionally, a timer may be set in the BeiDou parameter publishing server 29, and the BeiDou parameter publishing server 29 may send the updated BeiDou communication parameter to the cloud server in a period preset for the timer.

Further, optionally, if the updated BeiDou communication parameter is a key parameter, the BeiDou parameter publishing server 29 sends the updated BeiDou communication parameter to the cloud server 400 in the preset period. If the updated BeiDou communication parameter is a non-key parameter, the BeiDou parameter publishing server 29 sends the updated BeiDou communication parameter to the cloud server 400 after the preset period expires.

The BeiDou parameter publishing server 29 may further send version information (for example, information such as a version number and update time) of the updated BeiDou communication parameter to the cloud server 400.

The terminal 100 may obtain the updated BeiDou communication parameter from the cloud server 400 in a cellular network.

The terminal 100 may be in the BeiDou network, that is, the terminal 100 does not camp on the cellular network, and a BeiDou communication module in the terminal 100 is enabled. The terminal 100 may communicate with the BeiDou network device 200 by using the updated BeiDou communication parameter through the BeiDou short packet satellite 21.

In some scenarios, the terminal 100 may obtain the updated BeiDou communication parameter in the cellular network or a Wi-Fi network through the cloud server 400.

Based on the parameter update system 20 provided in FIG. 8, an embodiment of this application provides a parameter update method in the BeiDou communication system. The method may include: When the terminal 100 meets a first condition, the terminal 100 obtains first version information of a locally configured first BeiDou communication parameter of the terminal 100, where the first condition may be that the terminal 100 leaves a resident location within preset duration. Then, the terminal 100 obtains second version information of a second BeiDou communication parameter in the cloud server 400. When a version indicated in the second version information is later than a version indicated in the first version information, the terminal 100 obtains the second BeiDou communication parameter in the cloud server 400. Finally, the terminal 100 updates the first BeiDou communication parameter to the second BeiDou communication parameter.

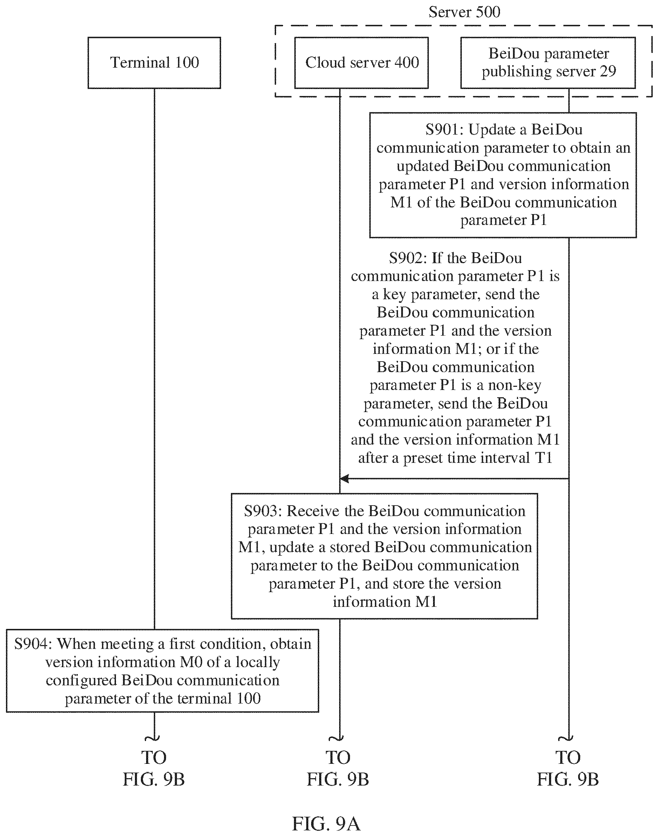

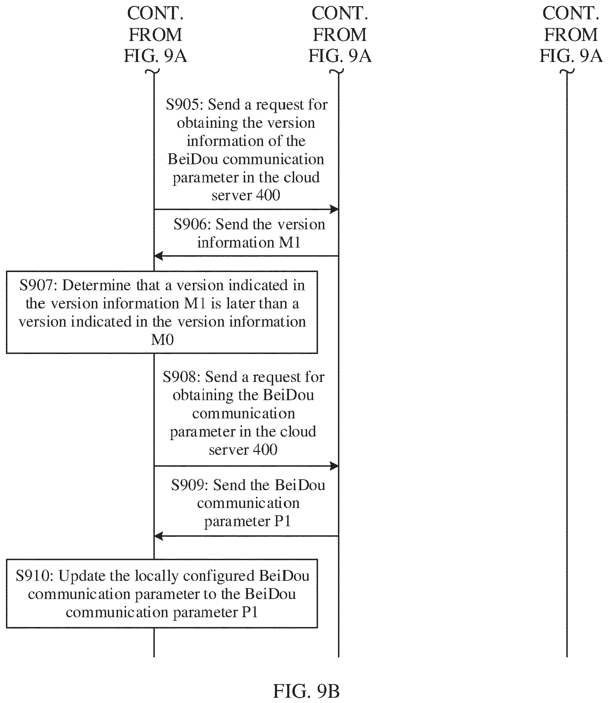

FIG. 9A and FIG. 9B are an example of a schematic flowchart of a parameter update method in a BeiDou communication system according to an embodiment of this application. As shown in FIG. 9A and FIG. 9B, the parameter update method in the BeiDou communication system may include the following steps.

S901: A BeiDou parameter publishing server 29 updates a BeiDou communication parameter to obtain an updated BeiDou communication parameter P1 and version information M1 of the BeiDou communication parameter P1.

After receiving a parameter update indication, a control system 28 may send the BeiDou communication parameter P1 of a latest version and the version information M1 of the BeiDou communication parameter P1 to the BeiDou parameter publishing server 29. The control system 28 may further indicate the BeiDou parameter publishing server 29 to update the stored BeiDou communication parameter to the BeiDou communication parameter P1, and store the version information M1 of the BeiDou communication parameter P1.

Optionally, the parameter update indication received by the control system 28 may be an indication entered by a research and development engineer in the control system 28.

It may be understood that the BeiDou communication parameter P1 may include one or more of a satellite ephemeris orbit parameter, a protocol stack parameter, a satellite channel parameter, a satellite beam information parameter, a BeiDou network device information parameter, a terminal capability information parameter, a compression information parameter, and an application information parameter.

The version information M1 may include update time of the BeiDou communication parameter P1 (for example, 2021/10/10 or 4 days ago), a version number (for example, 1.2.1 or version 1.0), and the like. It may be understood that a form of the update time and a specific form of the version number in the version information M1 are not limited in embodiments of this application.

Further, if the BeiDou communication parameter P1 is a key parameter, the BeiDou communication parameter P1 carries a first identifier, where the first identifier indicates that the BeiDou communication parameter P1 is a key parameter.

In a possible implementation, each BeiDou communication parameter P1 may be stored in one file. The first identifier may exist in a file name of the file that stores the BeiDou communication parameter P1. For example, the first identifier may be a suffix of the file name of the file that stores the BeiDou communication parameter P1. For example, a name of a file storing the BeiDou communication parameter P1 is "protocol stack parameter. key parameter", where "key parameter" is a suffix of the file name "protocol stack parameter. key parameter", and the first identifier is "key parameter". It may be understood that specific content and a specific form of the first identifier are not limited in embodiments of this application.

S902: If the BeiDou communication parameter P1 is a key parameter, the BeiDou parameter publishing server 29 sends the BeiDou communication parameter P1 and the version information M1 to a cloud server 400; or if the BeiDou communication parameter P1 is a non-key parameter, the BeiDou parameter publishing server 29 sends the BeiDou communication parameter P1 and the version information M1 to a cloud server 400 after a preset time interval T1.

The BeiDou parameter publishing server 29 may determine, based on whether the BeiDou communication parameter P1 carries the first identifier, whether the BeiDou communication parameter P1 is a key parameter. If the BeiDou communication parameter P1 carries the first identifier, the BeiDou parameter publishing server 29 may determine that the BeiDou communication parameter P1 is a key parameter. If the BeiDou communication parameter P1 does not carry the first identifier, the BeiDou parameter publishing server 29 may determine that the BeiDou communication parameter P1 is a non-key parameter.

If the BeiDou communication parameter P1 is a key parameter, the BeiDou parameter publishing server 29 immediately sends the BeiDou communication parameter P1 and the version information M1 to the cloud server 400; or if the BeiDou communication parameter P1 is a non-key parameter, the BeiDou parameter publishing server 29 sends the BeiDou communication parameter P1 and the version information M1 to the cloud server 400 after the preset time interval T1. The preset time interval T1 may be one week (which may alternatively be referred to as seven days), two weeks (which may alternatively be referred to as 14 days), one month, two months, or the like. It may be understood that a specific value of the preset time interval T1 is not limited in embodiments of this application.

In a possible implementation, a timer for updating a parameter may be set in the BeiDou parameter publishing server 29. The BeiDou parameter publishing server 29 may start the timer for updating a parameter, and update a parameter in a preset period of the timer.

S903: The cloud server 400 receives the BeiDou communication parameter P1 and the version information M1, updates a stored BeiDou communication parameter to the BeiDou communication parameter P1, and stores the version information M1.

The cloud server 400 may receive the BeiDou communication parameter P1 and the version information M1 that are sent by the BeiDou parameter publishing server 29. The cloud server 400 updates the BeiDou communication parameter stored in the cloud server 400 to the BeiDou communication parameter P1, and stores the version information M1 of the BeiDou communication parameter P1. It may be understood that, if the BeiDou communication parameter P1 is a satellite ephemeris orbit parameter, the cloud server 400 updates a satellite ephemeris orbit parameter stored in the cloud server 400 to the BeiDou communication parameter P1.

In a possible manner, the BeiDou parameter publishing server 29 may first send the version information M1 of the BeiDou communication parameter P1 to the cloud server 400. If the cloud server 400 determines that a version indicated in the version information M1 is later than a version of the BeiDou communication parameter stored in the cloud server 400, the cloud server 400 obtains the BeiDou communication parameter P1 from the BeiDou parameter publishing server 29.

In a possible implementation, if the cloud server 400 determines that a version indicated in the version information M1 is the same as a version of the BeiDou communication parameter stored in the cloud server 400, the cloud server 400 does not obtain the BeiDou communication parameter P1 from the BeiDou parameter publishing server 29.

S904: When meeting a first condition, the terminal 100 obtains version information M0 of a locally configured BeiDou communication parameter of the terminal 100.

When meeting the first condition, the terminal 100 obtains the version information M0 of the locally configured BeiDou communication parameter of the terminal 100. The first condition may be that the terminal 100 leaves a resident location within preset duration (for example, leaves a residence city or a working city).

The terminal 100 may determine, based on information such as a network connected to the terminal 100, location information, and travel information of a user (such as ticket purchase information and a schedule), whether the terminal 100 meets the first condition. Specifically, the terminal 100 may determine whether the network connected to the terminal 100 is a resident network (namely, a network to which the terminal 100 is frequently connected, for example, a Wi-Fi network at home). If the network is not a resident network, the terminal 100 may determine, based on the location information and the travel information of the user, whether the terminal 100 leaves the resident location. If the location information of the terminal 100 indicates that the terminal 100 is not in the resident location, the terminal 100 may determine that the terminal 100 leaves the resident location. Alternatively, if the travel information of the user in the terminal 100 indicates that the terminal 100 is to go to another city on a first date, or the schedule indicates that the terminal 100 is to go to another city on a first date, the terminal 100 may determine whether the terminal 100 leaves the resident location within the preset duration.

The preset duration may be configured by a system of the terminal 100. The preset duration may be 30 minutes, or may be 20 minutes. A specific value of the preset duration is not limited in embodiments of this application.

For example, the place of residence of the user of the terminal 100 is in a city A, and the place of work is also in the city A. If the terminal 100 detects, at 09:00 on October 10, that a network connected to the terminal 100 is not a resident network, and the terminal 100 has ticket purchase information from the city A to a city B at 09:30 on October 10, the terminal 100 may determine that the terminal 100 leaves the resident location at 09:30 on October 10. For example, if preset duration is 30 minutes, the terminal 100 may start to perform step S904 at 09:00 on October 10.

In this way, before the terminal 100 leaves the resident location, the terminal 100 may update the BeiDou communication parameter in the terminal 100 in time. In addition, a case in which the terminal 100 cannot normally communicate with the BeiDou network device 200 in an area without cellular network coverage because the version of the BeiDou communication parameter in the terminal 100 is inconsistent with the version of the BeiDou communication parameter in the BeiDou network device 200 can be avoided.

S905: The terminal 100 sends, to the cloud server 400, a request for obtaining the version information M1 of the BeiDou communication parameter P1 in the cloud server 400.

The terminal 100 may send the request to the cloud server. The request may be used to obtain the version information M1 of the BeiDou communication parameter P1 in the cloud server 400.

S906: The cloud server 400 sends the version information M1 to the terminal 100.

Based on the request that is sent by the terminal 100 and that is used to obtain the version information M1 of the BeiDou communication parameter P1 in the cloud server 400, the cloud server 400 may send the version information M1 to the terminal 100.

S907: The terminal 100 determines that the version indicated in the version information M1 is later than a version indicated in the version information M0.

The terminal 100 may receive the version information M1 sent by the cloud server 400. The terminal 100 may determine, based on the version information M0 and the version information M1, which version of the BeiDou communication parameter is later.

The terminal 100 may determine, based on the version number in the version information M1 and a version number in the version information M0, which version of the BeiDou communication parameter is later. If the version number in the version information M1 is later than the version number in the version information M0, the terminal 100 determines that the version indicated in the version information M1 is later than the version indicated in the version information M0. If the version number in the version information M1 is earlier than the version number in the version information M0, the terminal 100 determines that the version indicated in the version information M0 is later than the version indicated in the version information M1.

For example, if the version number in the version information M0 is 1.0, and the version number in the version information M1 is 2.0, the terminal 100 may determine that the version indicated in the version information M1 is later than the version indicated in the version information M0. If the version number in the version information M0 is 2.0, and the version number in the version information M1 is 1.0, the terminal 100 may determine that the version indicated in the version information M0 is later than the version indicated in the version information M1.

Optionally, the terminal 100 determines, based on update time in the version information M1 and update time in the version information M0, which version of the BeiDou communication parameter is later. If the update time in the version information M1 is later than the update time in the version information M0, the terminal 100 determines that the version indicated in the version information M1 is later than the version indicated in the version information M0. If the update time in the version information M1 is earlier than the update time in the version information M0, the terminal 100 determines that the version indicated in the version information M0 is later than the version indicated in the version information M1.

For example, if the update time in the version information M1 is 2021/10/10, and the update time in the version information M0 is 2021/9/1, the terminal 100 determines that the version indicated in the version information M1 is later than the version indicated in the version information M0. If the update time in the version information M1 is 2021/8/10, and the update time in the version information M0 is 2021/9/1, the terminal 100 determines that the version indicated in the version information M0 is later than the version indicated in the version information M1.

It may be understood that the version number in embodiments of this application is a version number of each BeiDou communication parameter. Different BeiDou communication parameters stored in the cloud server 400 or the terminal 100 and the BeiDou parameter publishing server 29 may correspond to different version numbers. For example, a version number of the satellite ephemeris orbit parameter stored in the terminal 100 may be different from a version number of the protocol stack parameter.

When the terminal 100 determines that the version indicated in the version information M1 is later than the version indicated in the version information M0, the terminal 100 may perform step S908 to step S910. When the terminal 100 determines that the version indicated in the version information M0 is later than the version indicated in the version information M1, or the version indicated in the version information M0 is the same as the version indicated in the version information M1, the terminal 100 does not perform step S908 to step S910.

S908: The terminal 100 sends, to the cloud server 400, a request for obtaining the BeiDou communication parameter in the cloud server 400.

The terminal 100 may send, to the cloud server 400, the request for obtaining the BeiDou communication parameter in the cloud server 400.

S909: The cloud server 400 sends the BeiDou communication parameter P1 to the terminal 100.

Based on the request sent by the terminal 100, the cloud server 400 may send the BeiDou communication parameter P1 to the terminal 100.

In a possible implementation, the BeiDou communication parameter P1 includes all BeiDou communication parameters.

Optionally, in another possible implementation, the BeiDou communication parameter P1 includes only the updated BeiDou communication parameter.

For example, if 100 BeiDou communication parameters are stored in the cloud server 400, and only 10 BeiDou communication parameters are updated this time, the BeiDou communication parameter P1 sent by the cloud server 400 to the terminal 100 may include the 100 BeiDou communication parameters. Alternatively, the BeiDou communication parameter P1 sent by the cloud server 400 to the terminal 100 stores only the 10 updated BeiDou communication parameters.

S910: The terminal 100 updates the locally configured BeiDou communication parameter to the BeiDou communication parameter P1.

The terminal 100 may receive the BeiDou communication parameter P1 sent by the cloud server 400. The terminal 100 may update the locally configured BeiDou communication parameter to the BeiDou communication parameter P1.

In a possible implementation, that the terminal 100 updates the BeiDou communication parameter in embodiments of this application may mean that the terminal updates an existing BeiDou communication parameter of an earlier version to a BeiDou communication parameter of a later version, and/or the terminal 100 adds a BeiDou communication parameter that is not included in the terminal 100.

Further, in a possible implementation, if the BeiDou communication parameter P1 includes a BeiDou communication parameter a, and a BeiDou communication parameter P0 does not include the BeiDou communication parameter a, the terminal 100 may also obtain the BeiDou communication parameter a, and configure the BeiDou communication parameter a.

Optionally, in some possible implementations, the terminal 100 directly obtains the BeiDou communication parameter P1 from the cloud server 400, and then updates the BeiDou communication parameter P0 in the terminal 100 to the BeiDou communication parameter P1. In other words, the terminal 100 does not need to perform step S905 to step S909.

In this way, before leaving the resident location, the terminal 100 may update the locally configured BeiDou communication parameter in the terminal 100 in time. In addition, a case in which the terminal 100 cannot normally communicate with the BeiDou network device 200 in an area without cellular network coverage because the version of the BeiDou communication parameter in the terminal 100 is inconsistent with the version of the BeiDou communication parameter in the BeiDou network device 200 can be avoided.

It may be understood that the terminal 100 first compares the version information M0 of the BeiDou communication parameter P0 with the version information M1 of the BeiDou communication parameter P1, and then determines whether the BeiDou communication parameter P1 needs to be obtained. In this way, it can be avoided that the terminal 100 still updates the parameter when versions of the BeiDou communication parameter P0 and the BeiDou communication parameter P1 are the same. In this way, power consumption of the terminal 100 can be reduced.

In embodiments of this application, the terminal 100 may be referred to as a first terminal, and the server 500 may be referred to as a server. The BeiDou communication parameter P0 may be referred to as a first BeiDou communication parameter. The version information M0 may be referred to as first version information. The BeiDou communication parameter P1 may be referred to as a second BeiDou communication parameter. The version information M1 may be referred to as second version information.

In some other scenarios, the terminal 100 is located in an area without cellular network coverage. In this case, the terminal 100 cannot obtain the updated BeiDou communication parameter from the cloud server 400 through the cellular network or the Wi-Fi network. The terminal 100 may obtain the updated BeiDou communication parameter through a nearby terminal.

An embodiment of this application provides a parameter update method in a BeiDou communication system. The method may include: A terminal 100 does not camp on a cellular network, and a terminal 600 does not camp on the cellular network. First, the terminal 100 establishes a communication connection to the terminal 600. Then, the terminal 100 obtains version information M2 of a BeiDou communication parameter in the terminal 600. Then, when the terminal 100 determines, based on the version information M2, that a version of the BeiDou communication parameter in the terminal 600 is later than a version of a BeiDou communication parameter in the terminal 100, the terminal 100 obtains a BeiDou communication parameter P2 in the terminal 600. Finally, the terminal 100 updates the locally configured BeiDou communication parameter to the BeiDou communication parameter P2.

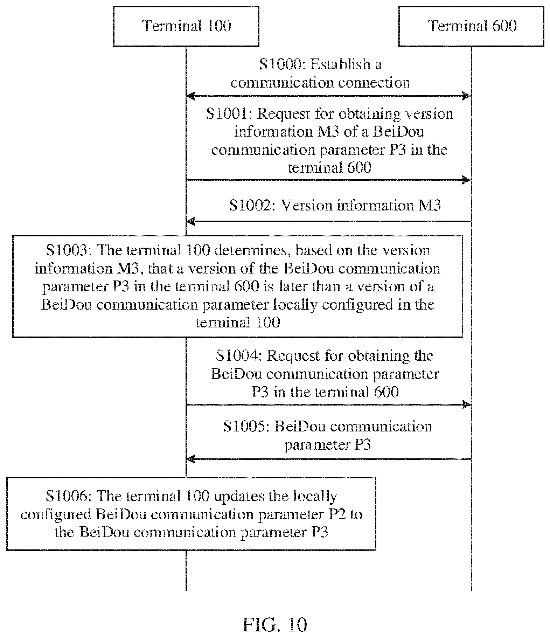

FIG. 10 is an example of a schematic flowchart of a parameter update method in a BeiDou communication system according to an embodiment of this application. As shown in FIG. 10, the parameter update method in the BeiDou communication system may include the following steps.

S1000: A terminal 100 establishes a communication connection to a terminal 600.

The terminal 100 does not camp on a cellular network, and the terminal 600 does not camp on the cellular network. The terminal 100 is locally configured with a BeiDou communication parameter P2, and stores version information M2 of the BeiDou communication parameter P2. The terminal 600 is locally configured with a BeiDou communication parameter P3, and stores version information M3 of the BeiDou communication parameter P3.

The terminal 100 may establish the communication connection to the terminal 600. There may be a plurality of manners in which the terminal 100 establishes the communication connection to the terminal 600. For example, the terminal 100 may establish the communication connection to the terminal 600 through Bluetooth. The terminal 100 may further establish the communication connection to the terminal 600 through vehicle to everything (vehicle to everything, V2X). A manner in which the terminal 100 establishes the communication connection to the terminal 600 is not limited in embodiments of this application.

In a possible implementation, an example in which the terminal 100 establishes the communication connection to the terminal 600 through Bluetooth is used to briefly describe a process in which the terminal 100 establishes the communication connection to the terminal 600. The terminal 100 may send a broadcast, where the broadcast is used to search for a nearby device for which a BeiDou communication parameter is configured. After receiving the broadcast, the terminal 600 may directly request to establish a communication connection to the terminal 100. Alternatively, the terminal 600 sends a message to the terminal 100 after receiving the broadcast, where the message indicates that a BeiDou communication parameter exists in the terminal 600. After receiving the message, the terminal 100 may initiate a communication connection establishment request to the terminal 600. After the terminal 600 receives the request and agrees to the request, the terminal 100 successfully establishes the communication connection to the terminal 600.

S1001: The terminal 100 sends, to the terminal 600, a request for obtaining the version information M3 of the BeiDou communication parameter P3 in the terminal 600.

The terminal 100 may send the request to the terminal 600, where the request is used to obtain the version information M3 of the BeiDou communication parameter P3 in the terminal 600.

S1002: The terminal 600 sends the version information M3 to the terminal 100.

The terminal 600 may receive the request that is sent by the terminal 100 and that is used to obtain the version information M3 of the BeiDou communication parameter P3 in the terminal 600. Based on the request, the terminal 600 may send the version information M3 to the terminal 100.

S1003: The terminal 100 determines, based on the version information M3, that a version of the BeiDou communication parameter P3 in the terminal 600 is later than a version of the locally configured BeiDou communication parameter of the terminal 100.

The terminal 100 may receive the version information M3 sent by the terminal 600. The terminal 100 may determine, based on the version information M3 and the version information M2 of the BeiDou communication parameter P2 in the terminal 100, which version of the BeiDou communication parameter is later.

The terminal 100 may determine, based on a version number in the version information M2 and a version number in the version information M3, which version of the BeiDou communication parameter is later. If the version number in the version information M2 is later than the version number in the version information M3, the terminal 100 determines that the version indicated in the version information M2 is later than the version indicated in the version information M3. That is, the version of the BeiDou communication parameter P2 is later than the version of the BeiDou communication parameter P3. If the version number in the version information M2 is earlier than the version number in the version information M3, the terminal 100 determines that the version indicated in the version information M3 is later than the version indicated in the version information M2. That is, the version of the BeiDou communication parameter P3 is later than the version of the BeiDou communication parameter P2.

For example, if the version number in the version information M2 is 1.0, and the version number in the version information M3 is 2.0, the terminal 100 may determine that the version indicated in the version information M3 is later than the version indicated in the version information M2. If the version number in the version information M2 is 2.0, and the version number in the version information M3 is 1.0, the terminal 100 may determine that the version indicated in the version information M2 is later than the version indicated in the version information M3.

Optionally, the terminal 100 determines, based on update time in the version information M2 and update time in the version information M3, which version of the BeiDou communication parameter is later. If the update time in the version information M3 is later than the update time in the version information M2, the terminal 100 determines that the version indicated in the version information M3 is later than the version indicated in the version information M2. If the update time in the version information M3 is earlier than the update time in the version information M2, the terminal 100 determines that the version indicated in the version information M2 is later than the version indicated in the version information M3.

For example, if the update time in the version information M3 is 2021/10/10, and the update time in the version information M2 is 2021/9/1, the terminal 100 determines that the version indicated in the version information M3 is later than the version indicated in the version information M2. If the update time in the version information M3 is 2021/8/10, and the update time in the version information M2 is 2021/9/1, the terminal 100 determines that the version indicated in the version information M2 is later than the version indicated in the version information M3.

When the terminal 100 determines that the version indicated in the version information M3 is later than the version indicated in the version information M2, the terminal 100 may perform step S1004 to step S1006. When the terminal 100 determines that the version indicated in the version information M2 is later than the version indicated in the version information M3, the terminal 100 does not perform step S1004 to step S1006.

In a possible implementation, if the terminal 100 determines that the version indicated in the version information M2 is the same as the version indicated in the version information M3 of the BeiDou communication parameter P3 in the terminal 600, the terminal 100 may not obtain the BeiDou communication parameter P3 from the terminal 600. The terminal 100 does not perform step S1004 to step S1006.

S1004: The terminal 100 sends, to the terminal 600, a request for obtaining the BeiDou communication parameter P3 in the terminal 600.

The terminal 100 may send, to the terminal 600, the request used to obtain the BeiDou communication parameter P3 in the terminal 600.

S1005: The terminal 600 sends the BeiDou communication parameter P3 to the terminal 100.

Based on the request that is sent by the terminal 100 and that is used to obtain the BeiDou communication parameter P3 in the terminal 600, the terminal 600 may send the BeiDou communication parameter P3 to the terminal 100.

S1006: The terminal 100 updates the locally configured BeiDou communication parameter P2 to the BeiDou communication parameter P3.

After receiving the BeiDou communication parameter P3, the terminal 100 may update the locally configured BeiDou communication parameter P2 to the BeiDou communication parameter P3.

In a possible implementation, that the terminal 100 updates the BeiDou communication parameter in embodiments of this application may mean that the terminal updates an existing BeiDou communication parameter of an earlier version to a BeiDou communication parameter of a later version, and/or the terminal 100 adds a BeiDou communication parameter that is not included in the terminal 100.

Further, in a possible implementation, if the BeiDou communication parameter P3 includes a BeiDou communication parameter a, and the BeiDou communication parameter P2 does not include the BeiDou communication parameter a, the terminal 100 may also obtain the BeiDou communication parameter a, and configure the BeiDou communication parameter a.

Optionally, in some possible implementations, the terminal 100 directly obtains the BeiDou communication parameter P3 from a cloud server 400, and then updates the BeiDou communication parameter P2 in the terminal 100 to the BeiDou communication parameter P3. In other words, the terminal 100 does not need to perform step S1001 to step S1003.

In this way, in an environment without a cellular network or a wireless local area network, the terminal 100 may update the BeiDou communication parameter configured in the terminal 100 in time. Therefore, a case in which the terminal 100 cannot normally communicate with the BeiDou network device 200 in an area without cellular network coverage because the version of the BeiDou communication parameter in the terminal 100 is inconsistent with the version of the BeiDou communication parameter in the BeiDou network device 200 can be avoided.

In embodiments of this application, the terminal 100 may be referred to as a first terminal, and the terminal 600 may be referred to as a second terminal. The BeiDou communication parameter P2 may be referred to as a first BeiDou communication parameter. The version information M2 may be referred to as first version information. The BeiDou communication parameter P3 may be referred to as a second BeiDou communication parameter. The version information M3 may be referred to as second version information.

The following first describes an example of a terminal 100 provided in embodiments of this application.

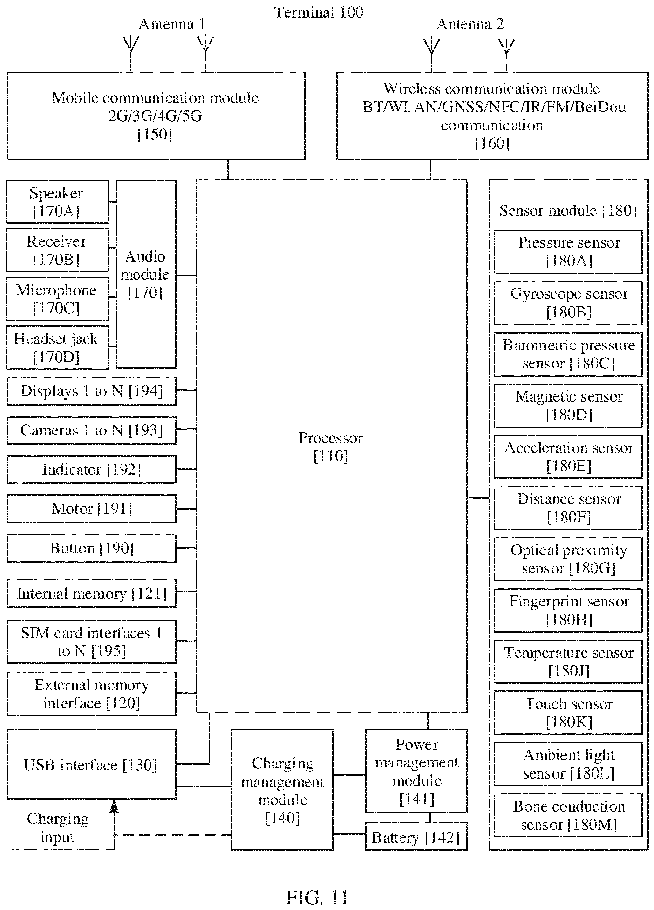

FIG. 11 is a schematic diagram of a structure of a terminal 100 according to an embodiment of this application.

The following uses the terminal 100 as an example to specifically describe this embodiment. It should be understood that the terminal 100 may have more or fewer components than those shown in the figure, or may combine two or more components, or may have different component configurations. Components shown in the figure may be implemented by hardware that includes one or more signal processing and/or application-specific inter-integrated circuits, software, or a combination of hardware and software.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an illustrated structure in this embodiment of the present invention does not constitute a specific limitation on the terminal 100. In some other embodiments of this application, the terminal 100 may include more or fewer components than those shown in the figure, or some components may be combined, or some components may be split, or there may be a different component layout. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-inter-integrated circuit sound (inter-inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the terminal 100. The processor 110 communicates with the display 194 through the DSI, to implement a display function of the terminal 100.

The GPIO interface may be configured by software. The GPIO interface may be configured for control signals or data signals. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The SIM interface may be configured to communicate with the SIM card interface 195, to implement a function of transmitting data to an SIM card or reading data in an SIM card.

The USB interface 130 is an interface that conforms to a USB standard specification, and may be specifically a mini USB interface, a micro USB interface, a USB Type-C interface, or the like. The USB interface 130 may be configured to connect to a charger to charge the terminal 100, or may be configured to exchange data between the terminal 100 and a peripheral device, or may be configured to connect to a headset for playing audio through the headset. The interface may be further configured to connect to another electronic device such as an AR device.

It may be understood that an interface connection relationship between the modules illustrated in embodiments of the present invention is merely an example for description, and does not constitute a limitation on the structure of the terminal 100. In some other embodiments of this application, the terminal 100 may alternatively use an interface connection manner different from that in the foregoing embodiment, or may use a combination of a plurality of interface connection manners.

The charging management module 140 is configured to receive a charging input from a charger. The charger may be a wireless charger or a wired charger.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like.

A wireless communication function of the terminal 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal 100 The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same device as at least some modules of the processor 110.

The modem processor may include a modulator and a demodulator. The modulator is configured to modulate a to-be-transmitted low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that is applied to the terminal 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), a BeiDou communication module, frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-transmitted signal from the processor 110, perform frequency modulation and amplification on the signal, and convert the signal into an electromagnetic wave for radiation through the antenna 2.

The BeiDou communication module may be configured to communicate with a BeiDou network device 200. The BeiDou communication module may support short packet transmission with the BeiDou network device 200.

In some embodiments, the antenna 1 and the mobile communication module 150 in the terminal 100 are coupled, and the antenna 2 and the wireless communication module 160 in the terminal 100 are coupled, so that the terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal 100 may implement a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD). The display panel may be an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like. In some embodiments, the terminal 100 may include 1 or N displays 194, where N is a positive integer greater than 1.

The terminal 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and color of the image. The ISP may further optimize parameters such as exposure and a color temperature of a photographing scenario. In some embodiments, the ISP may be disposed in the camera 193.

The camera 193 may be configured to capture a static image or a video. An optical image of an object is generated through a lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a frequency, the digital signal processor is configured to perform Fourier transformation on frequency energy.

The video codec is configured to compress or decompress a digital video. The terminal 100 may support one or more video codecs. In this way, the terminal 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the terminal 100 may be implemented through the NPU, for example, image recognition, facial recognition, speech recognition, and text understanding.

The internal memory 121 may be one or more random access memories (random access memory, RAM), and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM is usually referred to as a DDR5 SDRAM), and the like.

The non-volatile memory may include a magnetic disk storage device and a flash memory (flash memory).

According to an operating principle, the flash memory may be classified into NOR FLASH, NAND FLASH, 3D NAND FLASH, and the like; according to potential orders of storage cells, the flash memory may be classified into a single-level storage cell (single-level cell, SLC), a multi-level storage cell (multi-level cell, MLC), a triple-level cell (triple-level cell, TLC), a quad-level cell (quad-level cell, QLC), and the like; and according to storage specifications, the flash memory may be classified into a universal flash storage (English: universal flash storage, UFS), an embedded multi media memory card (embedded multi media Card, eMMC), and the like.

The random access memory may be directly read and written by the processor 110, may be configured to store executable programs (such as machine instructions) of an operating system or another running program, and may also be configured to store data of users and applications.

The non-volatile memory may also store the executable programs, the data of the users and the applications, and the like, and may be loaded into the random access memory in advance, to be directly read and written by the processor 110.

The terminal 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The terminal 100 may be used to listen to music or answer a call in a hands-free mode over the speaker 170A.

The receiver 170B, also referred to as an "earpiece", is configured to convert an electrical audio signal into a sound signal. When a call is answered or speech information is received through the terminal 100, the receiver 170B may be put close to a human ear to listen to a voice.

The microphone 170C, also referred to as a "mike" or a "mic", is configured to convert a sound signal into an electrical signal. When making a call or transmitting a voice message, a user may make a sound near the microphone 170C through a mouth of the user, to input a sound signal to the microphone 170C. At least one microphone 170C may be disposed in the terminal 100. In some other embodiments, two microphones 170C may be disposed in the terminal 100, to collect a sound signal and implement a noise reduction function. In some other embodiments, three, four, or more microphones 170C may alternatively be disposed in the terminal 100, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal 100 determines pressure intensity based on the change of the capacitance. When a touch operation is performed on the display 194, the terminal 100 detects intensity of the touch operation by using the pressure sensor 180A. The terminal 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a motion posture of the terminal 100. In some embodiments, angular velocities of the terminal 100 around three axes (namely, x, y, and z axes) may be determined by using the gyroscope sensor 180B. The gyroscope sensor 180B may be configured to implement image stabilization during photographing. For example, when a shutter is pressed, the gyroscope sensor 180B detects an angle at which the terminal 100 jitters, calculates, based on the angle, a distance for which a lens module needs to compensate, and allows the lens to cancel the jitter of the terminal 100 through reverse motion, to implement image stabilization. The gyroscope sensor 180B may also be used in a navigation scenario or a somatic game scenario.

The barometric pressure sensor 180C is configured to measure barometric pressure. In some embodiments, the terminal 100 calculates an altitude based on a barometric pressure value measured by the barometric pressure sensor 180C, to assist in positioning and navigation.

The magnetic sensor 180D includes a Hall sensor. The terminal 100 may detect opening and closing of a flip cover by using the magnetic sensor 180D. In some embodiments, when the terminal 100 is a flip phone, the terminal 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect magnitudes of accelerations of the terminal 100 in various directions (generally three axes). A magnitude and a direction of gravity may be detected when the terminal 100 is still. The acceleration sensor 180E may be further configured to identify a posture of the electronic device, and is used in an application such as switching between a landscape mode and a portrait mode or a pedometer.

The distance sensor 180F is configured to measure a distance. The terminal 100 may measure the distance in an infrared manner or a laser manner. In some embodiments, in a photographing scenario, the terminal 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The terminal 100 emits infrared light by using the light-emitting diode. The terminal 100 detects infrared reflected light from a nearby object by using the photodiode. When sufficient reflected light is detected, the terminal 100 may determine that there is an object near the terminal 100. When insufficient reflected light is detected, the terminal 100 may determine that there is no object near the terminal 100. The terminal 100 may detect, by using the optical proximity sensor 180G, that the user holds the terminal 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The terminal 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the terminal 100 is in a pocket, to avoid an accidental touch.

The fingerprint sensor 180H is configured to collect a fingerprint. The terminal 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal 100 executes a temperature processing policy based on the temperature detected by the temperature sensor 180J. For example, when the temperature reported by the temperature sensor 180J exceeds a threshold, the terminal 100 lowers performance of a processor located near the temperature sensor 180J, to reduce power consumption for thermal protection. In some other embodiments, when the temperature is lower than another threshold, the terminal 100 heats the battery 142 to avoid abnormal shutdown of the terminal 100 due to a low temperature. In some other embodiments, when the temperature is lower than still another threshold, the terminal 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided by using the display 194. In some other embodiments, the touch sensor 180K may alternatively be disposed on a surface of the terminal 100 at a location different from that of the display 194.

The button 190 includes a power button, a volume button, and the like. The button 190 may be a mechanical button, or may be a touch button. The terminal 100 may receive a button input, and generate a button signal input related to a user setting and function control of the terminal 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is also compatible with different types of SIM cards. The SIM card interface 195 is also compatible with an external memory card. The terminal 100 interacts with a network by using the SIM card, to implement functions such as conversation and data communication.

The foregoing content describes in detail the methods provided in this application. To better implement the foregoing solutions in embodiments of this application, embodiments of this application further provide corresponding apparatuses or devices.

In embodiments of this application, the terminal 100 and the server 500 may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in embodiments of this application, module division is an example, and is merely a logical function division. In actual implementation, another division manner may be used.

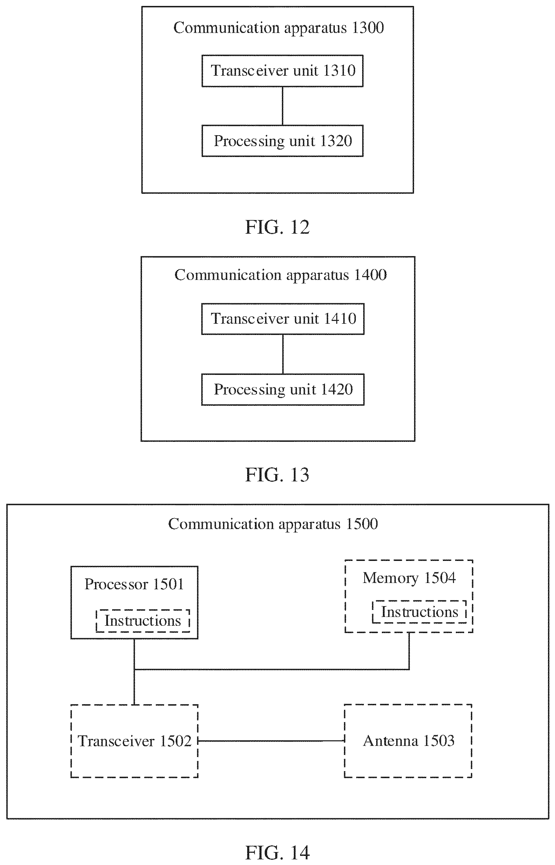

The following describes in detail communication apparatuses in embodiments of this application with reference to FIG. 12 to FIG. 15.

When an integrated unit is used, refer to FIG. 12. FIG. 12 is a schematic diagram of a structure of a communication apparatus 1300 according to an embodiment of this application. The communication apparatus 1300 may be the terminal 100 in the foregoing embodiments. Optionally, the communication apparatus 1300 may be a chip/chip system, for example, a BeiDou communication chip. As shown in FIG. 12, the communication apparatus 1300 may include a transceiver unit 1310 and a processing unit 1320.

In a design, the transceiver unit 1310 may be configured to send, to a server 500, a request for obtaining version information of a BeiDou communication parameter, and send a request for obtaining the BeiDou communication parameter.

The processing unit 1320 may be configured to determine, based on the version information in the server 500, that a version of the BeiDou communication parameter in the server 500 is later than a version of a locally configured BeiDou communication parameter of the terminal 100.

Optionally, the transceiver unit 1310 may be further configured to perform function steps related to sending and receiving that are performed by the terminal 100 in the method embodiment shown in FIG. 9A and FIG. 9B or FIG. 10.

Optionally, the processing unit 1320 may be further configured to perform function steps related to protocol parsing and encapsulation and operation determining that are performed by the terminal 100 in the method embodiment shown in FIG. 9A and FIG. 9B or FIG. 10.

It should be understood that the communication apparatus 1300 in this design may correspondingly perform the method steps performed by the terminal 100 in the foregoing embodiment. For brevity, details are not described herein again.

When an integrated unit is used, refer to FIG. 13. FIG. 13 is a schematic diagram of a structure of a communication apparatus 1400 according to an embodiment of this application. The communication apparatus 1400 may be the server 500 in the foregoing embodiments. Optionally, the communication apparatus 1400 may be a specific network element in the server 500, for example, one network element or a combination of a plurality of network elements in the cloud server 400 and the BeiDou parameter publishing server 29. As shown in FIG. 13, the communication apparatus 1400 may include a transceiver unit 1410 and a processing unit 1420.

In a design, the transceiver unit 1410 may be configured to receive the request for obtaining the version information of the BeiDou communication parameter in the server 500 and the request for obtaining the BeiDou communication parameter that are sent by the terminal 100.

The processing unit 1420 may be configured to determine whether an updated parameter in the server 500 is a key parameter or a non-key parameter.

Optionally, the transceiver unit 1410 may be further configured to perform function steps related to sending and receiving that are performed by the server 500 in the method embodiment shown in FIG. 9A and FIG. 9B.

Optionally, the processing unit 1420 may be further configured to perform function steps related to protocol parsing and encapsulation and operation determining that are performed by the server 500 in the method embodiment shown in FIG. 9A and FIG. 9B.

It should be understood that the communication apparatus 1400 in this design may correspondingly perform the method steps performed by the server 500 in the foregoing embodiment. For brevity, details are not described herein again.

The terminal 100 and the server 500 in embodiments of this application are described above. It should be understood that a product in any form that has a function of the terminal 100 in FIG. 12 or a product in any form that has a function of the server 500 in FIG. 13 shall fall within the protection scope of embodiments of this application.

In a possible product form, the terminal 100 in embodiments of this application may be implemented by using general bus architectures.

FIG. 14 is a schematic diagram of a structure of a communication apparatus 1500 according to an embodiment of this application. The communication apparatus 1500 may be the terminal 100 or an apparatus in the terminal 100. As shown in FIG. 14, the communication apparatus 1500 includes a processor 1501 and a transceiver 1502 that is internally connected to and communicates with the processor. The processor 1501 is a general-purpose processor, a dedicated processor, or the like. For example, the processor 1501 may be a baseband processor or a central processing unit for satellite communication. The baseband processor for satellite communication may be configured to process a satellite communication protocol and satellite communication data, and the central processing unit may be configured to control a communication apparatus (for example, a baseband chip, a terminal, a terminal chip, and the like), execute a computer program, and process data of the computer program. The transceiver 1502 may be referred to as a transceiver unit, a transceiver, a transceiver circuit, or the like, and is configured to implement a transceiver function. The transceiver 1502 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a transmitting function. Optionally, the communication apparatus 1500 may further include an antenna 1503 and/or a radio frequency unit (not shown in the figure). The antenna 1503 and/or the radio frequency unit may be located inside the communication apparatus 1500, or may be separated from the communication apparatus 1400. In other words, the antenna 1503 and/or the radio frequency unit may be deployed remotely or in a distributed manner.

Optionally, the communication apparatus 1500 may include one or more memories 1504. The memory 1504 may store instructions. The instructions may be a computer program. The computer program may be run on the communication apparatus 1500, so that the communication apparatus 1500 is enabled to perform the method described in the foregoing method embodiments. Optionally, the memory 1504 may further store data. The communication apparatus 1500 and the memory 1504 may be separately disposed, or may be integrated together.

The processor 1501, the transceiver 1502, and the memory 1504 may be connected through a communication bus.

In a design, the communication apparatus 1500 may be configured to perform a function of the terminal 100 in the foregoing embodiment. The processor 1501 may be configured to perform function steps related to protocol parsing and encapsulation and operation determining that are performed by the terminal 100 in the embodiment shown in FIG. 9A and FIG. 9B or FIG. 10, and/or another process used in the technology described in this specification. The transceiver 1502 may be configured to perform function steps related to protocol parsing and encapsulation and operation determining that are performed by the terminal 100 in the embodiment shown in FIG. 9A and FIG. 9B or FIG. 10, and/or another process used in the technology described in this specification.

In any one of the foregoing designs, the processor 1501 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1501 may store instructions. The instructions may be a computer program. The computer program is run on the processor 1501, so that the communication apparatus 1500 is enabled to perform the method steps performed by the terminal 100 in the foregoing method embodiments. The computer program may be fixed in the processor 1501. In this case, the processor 1501 may be implemented by hardware.

In an implementation, the communication apparatus 1500 may include a circuit, and the circuit may implement a transmitting, receiving, or communication function in the foregoing method embodiments. The processor and the transceiver that are described in this application may be implemented on an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 14. The communication apparatus 1500 may be an independent device or may be a part of a large device. For example, the communication apparatus 1500 may be:
(1) an independent integrated circuit IC, a chip, or a chip system or subsystem;
(2) a set including one or more ICs, where optionally, the set of ICs may further include a storage component configured to store data and a computer program;
(3) an ASIC such as a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

In a possible product form, any network element in the server 500 in embodiments of this application (for example, the cloud server 400 and the BeiDou parameter publishing server 29) may be implemented by using a general bus architecture.

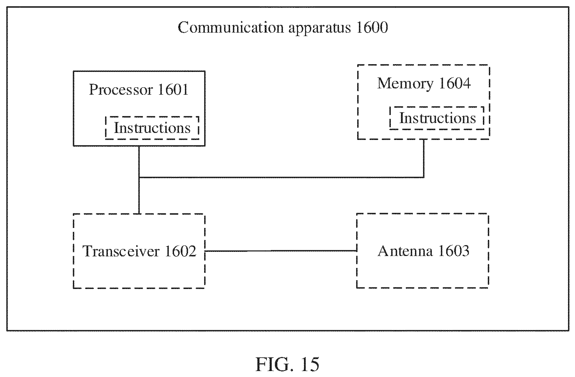

FIG. 15 is a schematic diagram of a structure of a communication apparatus 1600 according to an embodiment of this application. The communication apparatus 1600 may be the server 500 or an apparatus in the server 500. As shown in FIG. 15, the communication apparatus 1600 includes a processor 1601 and a transceiver 1602 that is internally connected to and communicates with the processor. The processor 1601 is a general-purpose processor, a dedicated processor, or the like. For example, the processor 1601 may be a baseband processor or a central processing unit for satellite communication. The baseband processor for satellite communication may be configured to process a satellite communication protocol and satellite communication data, and the central processing unit may be configured to control a communication apparatus (for example, a baseband chip, and the like), execute a computer program, and process data of the computer program. The transceiver 1602 may be referred to as a transceiver unit, a transceiver, a transceiver circuit, or the like, and is configured to implement a transceiver function. The transceiver 1602 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a transmitting function. Optionally, the communication apparatus 1600 may further include an antenna 1603 and/or a radio frequency unit (not shown in the figure). The antenna 1603 and/or the radio frequency unit may be located inside the communication apparatus 1600, or may be separated from the communication apparatus 1600. In other words, the antenna 1603 and/or the radio frequency unit may be deployed remotely or in a distributed manner.

Optionally, the communication apparatus 1600 may include one or more memories 1604. The memories 1604 may store instructions. The instructions may be a computer program. The computer program may be run on the communication apparatus 1600, so that the communication apparatus 1600 is enabled to perform the method described in the foregoing method embodiments. Optionally, the memory 1604 may further store data. The communication apparatus 1600 and the memory 1604 may be separately disposed, or may be integrated together.

The processor 1601, the transceiver 1602, and the memory 1604 may be connected through a communication bus.

In a design, the communication apparatus 1600 may be configured to perform a function of the server 500 in the foregoing embodiment. The processor 1601 may be configured to perform function steps related to protocol parsing and encapsulation and operation determining that are performed by the server 500 in the embodiment shown in FIG. 9A and FIG. 9B, and/or another process used in the technology described in this specification. The transceiver 1602 may be configured to perform function steps related to protocol parsing and encapsulation and operation determining that are performed by the server 500 in the embodiment shown in FIG. 9A and FIG. 9B, and/or another process used in the technology described in this specification.

In any one of the foregoing designs, the processor 1601 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1601 may store instructions. The instructions may be a computer program. The computer program is run on the processor 1601, so that the communication apparatus 1600 is enabled to perform the method steps performed by the server 500 in the foregoing method embodiments. The computer program may be fixed in the processor 1601. In this case, the processor 1601 may be implemented by hardware.

An embodiment of this application further provides a computer-readable storage medium. The computer-readable storage medium stores computer program code. When the processor executes the computer program code, a communication apparatus is enabled to perform the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a BeiDou communication parameter update system, including a terminal 100 and a server 500. The terminal 100 and the server 500 may perform the method in any one of the foregoing embodiments.

In this application, a short packet communication function and BeiDou communication parameter update in a BeiDou communication system are described in this specification. It may be understood that a short packet communication function or related parameter update may also exist in another satellite system. Therefore, this is not limited to the BeiDou communication system. If another satellite system also supports a short packet communication function and related parameter update, the method described in this application is also applicable to communication and related parameter update of the another satellite system.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments without departing from the scope of the technical solutions of embodiments of this application.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the methods in embodiments may be implemented by a computer program instructing related hardware. The program may be stored in a computer-readable storage medium. When the program is run, the procedures of the methods in embodiments are performed. The foregoing storage medium includes any medium that can store program code, such as a ROM, a random access memory RAM, a magnetic disk, or an optical disc.

## Claims

1. A parameter update method in a satellite communication system (10), that supports a short packet communication function and related parameter update, comprising:
obtaining (S904), by a first terminal (100), first version information of a locally configured first satellite communication parameter of the satellite communication system
when the first terminal (100) meets a first condition, wherein the first condition comprises that the first terminal (100) leaves a resident location within preset duration;
obtaining (S906), by the first terminal (100) from a server (500), second version information of a second satellite communication parameter of the satellite communication system
in the server (500);
when a version indicated in the second version information is later than a version indicated in the first version information, obtaining (S909), by the first terminal (100), the second satellite communication parameter of the satellite communication system in the server (500); and
updating (S910), by the first terminal (100), the locally configured first satellite communication of the satellite communication system to the second communication parameter of the satellite communication system.

2. The method according to claim 1, wherein the first satellite communication parameter of the satellite communication system and the second communication parameter of the satellite communication system indicate a data transmission format and a data transmission rate used when the first terminal (100) communicates with a network device of the satellite communication system.

3. The method according to claim 2, wherein the first communication parameter of the satellite communication system and the second communication parameter of the satellite communication system comprise a key parameter and a non-key parameter, and the key parameter carries a first identifier; the key parameter is sent by the server (500) to the first terminal (100) at a first moment, and the non-key parameter is sent by the server (500) to the first terminal (100) at a second moment; and the second moment is later than the first moment.

4. The method according to any one of claims 1 to 3, wherein the first communication parameter of the satellite communication system comprises one or more of a satellite ephemeris orbit parameter, a protocol stack parameter, a satellite channel parameter, a satellite beam information parameter, a network device information parameter of the satellite communication system, a terminal (100) capability information parameter, a compression information parameter, and an application information parameter; and the second communication parameter of the satellite communication system comprises one or more of a satellite ephemeris orbit parameter, a protocol stack parameter, a satellite channel parameter, a satellite beam information parameter, a network device information parameter of the satellite communication system, a terminal (100) capability information parameter, a compression information parameter, and an application information parameter.

5. The method according to claim 4, wherein the first version information comprises update time of the first communication parameter of the satellite communication system and/or a version number of the first communication parameter of the satellite communication system; and the second version information comprises update time of the second communication parameter of the satellite communication system and/or a version number of the second communication parameter of the satellite communication system.

6. The method according to claim 5, wherein that the version indicated in the second version information is later than the version indicated in the first version information comprises: the update time of the second communication parameter of the satellite communication system is later than the update time of the first communication parameter of the satellite communication system, or the version number of the second communication parameter of the satellite communication system is later than the version number of the first communication parameter of the satellite communication system.

7. The method according to any one of claims 1 to 6, wherein after the updating, by the first terminal (100), the locally configured first communication parameter of the satellite communication system to the second communication parameter of the satellite communication system, the method further comprises: communicating, by the first terminal (100), with the network device of the satellite communication system based on the second communication parameter of the satellite communication system.

8. The method according to any one of claims 1 to 7, wherein before the obtaining, by a first terminal (100), first version information of a locally configured first communication parameter of the satellite communication system when the first terminal (100) meets a first condition, the method further comprises determining, by the first terminal (100) based on one or more of location information of the first terminal (100), a network connected to the first terminal (100), and travel information of the first terminal (100), that the first terminal (100) meets the first condition.

9. A communication apparatus (1500), comprising one or more processors (1501), one or more memories (1504), and a transceiver (1502), wherein the transceiver (1502) and the one or more memories (1504) are coupled to the one or more processors (1501), the one or more memories (1504) are configured to store computer program code, the computer program code comprises computer instructions, and when the one or more processors (1501) execute the computer instructions, the communication apparatus (1500) is enabled to perform the method according to any one of claims 1 to 8.

10. A computer-readable storage medium, wherein the computer-readable storage medium stores instructions, and when the instructions are run on a computer, the computer is enabled to perform the method according to any one of claims 1 to 8.

11. A chip, comprising a processing circuit and an interface circuit, wherein the interface circuit is configured to receive code instructions and transmit the code instructions to the processing circuit, and the processing circuit is configured to run the code instructions to perform the method according to any one of claims 1 to 8.

## Patentansprüche

1. Parameteraktualisierungsverfahren in einem Satellitenkommunikationssystem (10), das eine Kurzpaketkommunikationsfunktion und eine zugehörige Parameteraktualisierung unterstützt, umfassend:
Erhalten (S904), in einem ersten Endgerät (100), von ersten Versionsinformationen eines lokal konfigurierten ersten Satellitenkommunikationsparameters des Satellitenkommunikationssystems, wenn das erste Endgerät (100) eine erste Bedingung erfüllt, wobei die erste Bedingung umfasst, dass das erste Endgerät (100) einen Heimatstandort innerhalb einer voreingestellten Dauer verlässt;
Erhalten (S906), in dem ersten Endgerät (100) von einem Server (500), von zweiten Versionsinformationen eines zweiten Satellitenkommunikationsparameters des Satellitenkommunikationssystems in dem Server (500);
wenn eine Version, die in den zweiten Versionsinformationen angezeigt wird, später ist als eine Version, die in den ersten Versionsinformationen angezeigt wird, Erhalten (S909), in dem ersten Endgerät (100), des zweiten Satellitenkommunikationsparameters des Satellitenkommunikationssystems in dem Server (500); und
Aktualisieren (S910), durch das erste Endgerät (100), der lokal konfigurierten ersten Satellitenkommunikation des Satellitenkommunikationssystems auf den zweiten Kommunikationsparameter des Satellitenkommunikationssystems.

2. Verfahren nach Anspruch 1, wobei der erste Satellitenkommunikationsparameter des Satellitenkommunikationssystems und der zweite Kommunikationsparameter des Satellitenkommunikationssystems ein Datenübertragungsformat und eine Datenübertragungsrate anzeigen, die verwendet werden, wenn das erste Endgerät (100) mit einer Netzwerkvorrichtung des Satellitenkommunikationssystems kommuniziert.

3. Verfahren nach Anspruch 2, wobei der erste Kommunikationsparameter des Satellitenkommunikationssystems und der zweite Kommunikationsparameter des Satellitenkommunikationssystems einen Schlüsselparameter und einen Nicht-Schlüsselparameter umfassen und wobei der Schlüsselparameter eine erste Kennung trägt; wobei der Schlüsselparameter von dem Server (500) zu einem ersten Zeitpunkt an das erste Endgerät (100) gesendet wird und wobei der Nicht-Schlüsselparameter von dem Server (500) zu einem zweiten Zeitpunkt an das erste Endgerät (100) gesendet wird; und wobei der zweite Zeitpunkt später ist als der erste Zeitpunkt.

4. Verfahren nach einem der Ansprüche 1 bis 3, wobei der erste Kommunikationsparameter des Satellitenkommunikationssystems einen oder mehrere umfasst von einem Orbitparameter von Satellitenephemeriden, einem Protokollstapelparameter, einem Satellitenkanalparameter, einem Satellitenstrahlinformationsparameter, einem Netzwerkvorrichtungsinformationsparameter des Satellitenkommunikationssystems, einem Fähigkeitsinformationsparameter eines Endgeräts (100), einem Kompressionsinformationsparameter und einem Anwendungsinformationsparameter; und wobei der zweite Kommunikationsparameter des Satellitenkommunikationssystems einen oder mehrere umfasst von einem Orbitparameter von Satellitenephemeriden, einem Protokollstapelparameter, einem Satellitenkanalparameter, einem Satellitenstrahlinformationsparameter, einem Netzwerkvorrichtungsinformationsparameter des Satellitenkommunikationssystems, einem Fähigkeitsinformationsparameter eines Endgeräts (100), einem Kompressionsinformationsparameter und einem Anwendungsinformationsparameter.

5. Verfahren nach Anspruch 4, wobei die ersten Versionsinformationen eine Aktualisierungszeit des ersten Kommunikationsparameters des Satellitenkommunikationssystems und/oder eine Versionsnummer des ersten Kommunikationsparameters des Satellitenkommunikationssystems umfassen; und wobei die zweiten Versionsinformationen eine Aktualisierungszeit des zweiten Kommunikationsparameters des Satellitenkommunikationssystems und/oder eine Versionsnummer des zweiten Kommunikationsparameters des Satellitenkommunikationssystems umfassen.

6. Verfahren nach Anspruch 5, wobei die Tatsache, dass die Version, die in den zweiten Versionsinformationen angezeigt wird, später ist als die Version, die in den ersten Versionsinformationen angezeigt wird, umfasst, dass: die Aktualisierungszeit des zweiten Kommunikationsparameters des Satellitenkommunikationssystems später ist als die Aktualisierungszeit des ersten Kommunikationsparameters des Satellitenkommunikationssystems, oder die Versionsnummer des zweiten Kommunikationsparameters des Satellitenkommunikationssystems später ist als die Versionsnummer des ersten Kommunikationsparameters des Satellitenkommunikationssystems.

7. Verfahren nach einem der Ansprüche 1 bis 6, wobei das Verfahren nach dem Aktualisieren, durch das erste Endgerät (100), des lokal konfigurierten ersten Kommunikationsparameters des Satellitenkommunikationssystems auf den zweiten Kommunikationsparameter des Satellitenkommunikationssystems ferner umfasst: Kommunizieren des ersten Endgeräts (100) mit der Netzwerkvorrichtung des Satellitenkommunikationssystems basierend auf dem zweiten Kommunikationsparameter des Satellitenkommunikationssystems.

8. Verfahren nach einem der Ansprüche 1 bis 7, wobei das Verfahren vor dem Erhalten, in einem ersten Endgerät (100), von ersten Versionsinformationen eines lokal konfigurierten ersten Kommunikationsparameters des Satellitenkommunikationssystems, wenn das erste Endgerät (100) eine erste Bedingung erfüllt, ferner umfasst:
Ermitteln, durch das erste Endgerät (100) basierend auf einer oder mehreren von Ortsinformationen des ersten Endgeräts (100), auf einem Netzwerk, das mit dem ersten Endgerät (100) verbunden ist und auf Bewegungsinformationen des ersten Endgeräts (100), dass das erste Endgerät (100) die erste Bedingung erfüllt.

9. Kommunikationseinrichtung (1500), die einen oder mehrere Prozessoren (1501), einen oder mehrere Speicher (1504) und einen Transceiver (1502) umfasst, wobei der Transceiver (1502) und der eine oder die mehreren Speicher (1504) mit dem einen oder den mehreren Prozessoren (1501) gekoppelt sind, wobei der eine oder die mehreren Speicher (1504) konfiguriert sind, um einen Computerprogrammcode zu speichern, wobei der Computerprogrammcode Computeranweisungen umfasst und wobei, wenn der eine oder die mehreren Prozessoren (1501) die Computeranweisungen ausführen, die Kommunikationseinrichtung (1500) aktiviert wird, um das Verfahren nach einem der Ansprüche 1 bis 8 durchzuführen.

10. Computerlesbares Speichermedium, wobei in dem computerlesbaren Speichermedium Anweisungen gespeichert sind, und wobei, wenn die Anweisungen in einem Computer ausgeführt werden, der Computer aktiviert wird, um das Verfahren nach einem der Ansprüche 1 bis 8 durchzuführen.

11. Chip, der eine Verarbeitungsschaltung und eine Schnittstellenschaltung umfasst, wobei die Schnittstellenschaltung konfiguriert ist zum Empfangen von Codeanweisungen und zum Senden der Codeanweisungen an die Verarbeitungsschaltung, und wobei die Verarbeitungsschaltung konfiguriert ist zum Ausführen der Codeanweisungen, um das Verfahren nach einem der Ansprüche 1 bis 8 durchzuführen.

## Revendications

1. Procédé de mise à jour de paramètre dans un système de communication par satellite (10), qui supporte une fonction de communication par paquets courts et une mise à jour de paramètre associé, comprenant :
l'obtention (S904), par un premier terminal (100), d'une première information de version d'un premier paramètre de communication par satellite configuré localement du système de communication par satellite lorsque le premier terminal (100) remplit une première condition, la première condition comprenant le fait que le premier terminal (100) quitte un emplacement de résidence dans une durée prédéterminée ;
l'obtention (S906), par le premier terminal (100) depuis un serveur (500), de deuxièmes informations de version d'un deuxième paramètre de communication par satellite du système de communication par satellite dans le serveur (500) ;
lorsqu'une version indiquée dans les deuxièmes informations de version est postérieure à une version indiquée dans les premières informations de version, l'obtention (S909), par le premier terminal (100), du deuxième paramètre de communication par satellite du système de communication par satellite dans le serveur (500) ; et
la mise à jour (S910), par le premier terminal (100), de la première communication par satellite configurée localement du système de communication par satellite vers le deuxième paramètre de communication du système de communication par satellite.

2. Procédé selon la revendication 1, dans lequel le premier paramètre de communication par satellite du système de communication par satellite et le deuxième paramètre de communication du système de communication par satellite indiquent un format de transmission de données et un débit de transmission de données utilisés lorsque le premier terminal (100) communique avec un dispositif réseau du système de communication par satellite.

3. Procédé selon la revendication 2, dans lequel le premier paramètre de communication du système de communication par satellite et le deuxième paramètre de communication du système de communication par satellite comprennent un paramètre clé et un paramètre non clé, et le paramètre clé transporte un premier identifiant ; le paramètre clé est envoyé par le serveur (500) au premier terminal (100) à un premier instant, et le paramètre non clé est envoyé par le serveur (500) au premier terminal (100) à un deuxième instant ; et le deuxième instant est postérieur au premier instant.

4. Procédé selon l'une quelconque des revendications 1 à 3, dans lequel le premier paramètre de communication du système de communication par satellite comprend un ou plusieurs parmi un paramètre d'orbite d'éphémérides de satellite, un paramètre de pile de protocoles, un paramètre de canal de satellite, un paramètre d'informations de faisceau de satellite, un paramètre d'informations de dispositif réseau du système de communication par satellite, un paramètre d'informations de capacité de terminal (100), un paramètre d'informations de compression et un paramètre d'informations d'application ; et le deuxième paramètre de communication du système de communication par satellite comprend un ou plusieurs parmi un paramètre d'orbite d'éphémérides de satellite, un paramètre de pile de protocoles, un paramètre de canal de satellite, un paramètre d'informations de faisceau de satellite, un paramètre d'informations de dispositif réseau du système de communication par satellite, un paramètre d'informations de capacité de terminal (100), un paramètre d'informations de compression et un paramètre d'informations d'application.

5. Procédé selon la revendication 4, dans lequel les premières informations de version comprennent l'heure de mise à jour du premier paramètre de communication du système de communication par satellite et/ou un numéro de version du premier paramètre de communication du système de communication par satellite ; et les deuxièmes informations de version comprennent l'heure de mise à jour du deuxième paramètre de communication du système de communication par satellite et/ou un numéro de version du deuxième paramètre de communication du système de communication par satellite.

6. Procédé selon la revendication 5, dans lequel le fait que la version indiquée dans les deuxièmes informations de version est ultérieure à la version indiquée dans les premières informations de version comprend : l'heure de mise à jour du deuxième paramètre de communication du système de communication par satellite est postérieure à l'heure de mise à jour du premier paramètre de communication du système de communication par satellite, ou le numéro de version du deuxième paramètre de communication du système de communication par satellite est postérieur au numéro de version du premier paramètre de communication du système de communication par satellite.

7. Procédé selon l'une quelconque des revendications 1 à 6, dans lequel, après la mise à jour, par le premier terminal (100), du premier paramètre de communication configuré localement du système de communication par satellite vers le deuxième paramètre de communication du système de communication par satellite, le procédé comprend en outre : la communication, par le premier terminal (100), avec le dispositif réseau du système de communication par satellite sur la base du deuxième paramètre de communication par satellite.

8. Procédé selon l'une quelconque des revendications 1 à 7, dans lequel avant l'obtention, par un premier terminal (100), de premières informations de version d'un premier paramètre de communication configuré localement du système de communication par satellite lorsque le premier terminal (100) remplit une première condition, le procédé comprend en outre :
la détermination, par le premier terminal (100) sur la base d'une ou plusieurs informations d'emplacement du premier terminal (100), d'un réseau connecté au premier terminal (100), et d'informations de déplacement du premier terminal (100), que le premier terminal (100) remplit la première condition.

9. Appareil de communication (1500), comprenant un ou plusieurs processeurs (1501), une ou plusieurs mémoires (1504), et un émetteur-récepteur (1502), l'émetteur-récepteur (1502) et les une ou plusieurs mémoires (1504) étant couplés aux un ou plusieurs processeurs (1501), les une ou plusieurs mémoires (1504) étant configurées pour stocker du code de programme informatique, le code de programme informatique comprenant des instructions informatiques, et lorsque les un ou plusieurs processeurs (1501) exécutent les instructions informatiques, l'appareil de communication (1500) pouvant réaliser le procédé selon l'une quelconque des revendications 1 à 8.

10. Support de stockage lisible par ordinateur, dans lequel le support de stockage lisible par ordinateur stocke des instructions, et lorsque les instructions sont exécutées sur un ordinateur, l'ordinateur peut réaliser le procédé selon l'une quelconque des revendications 1 à 8.

11. Puce, comprenant un circuit de traitement et un circuit d'interface, dans lequel le circuit d'interface est configuré pour recevoir des instructions de code et transmettre les instructions de code au circuit de traitement, et le circuit de traitement est configuré pour exécuter les instructions de code pour réaliser le procédé selon l'une quelconque des revendications 1 à 8.
